(19) Europäisches Patentamt / European Patent Office / Office européen des brevets

(11) **EP 4 312 384 A2**

(12) **EUROPEAN PATENT APPLICATION**

(43) Date of publication:
**31.01.2024 Bulletin 2024/05**

(21) Application number: **23184407.7**

(22) Date of filing: **10.07.2023**

(51) International Patent Classification (IPC):
**H04B 7/024** (2017.01)    **H01Q 3/00** (2006.01)
**H01Q 25/00** (2006.01)    **H04L 25/02** (2006.01)
**H04L 27/00** (2006.01)    **H04W 74/08** (2024.01)

(52) Cooperative Patent Classification (CPC):
**H04B 7/024; H01Q 3/00; H01Q 25/002;**
H04L 25/0204; H04L 27/0006; H04W 74/08

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.07.2022   CN 202210894215**
**03.11.2022   CN 202211372126**

(71) Applicant: **Huawei Technologies Co., Ltd.**
**Shenzhen, Guangdong 518129 (CN)**

(72) Inventors:
• **SHEN, Xiaoman**
  **Shenzhen, 518129 (CN)**
• **ZHANG, Shuaishuai**
  **Shenzhen, 518129 (CN)**
• **CHEN, Weixi**
  **Shenzhen, 518129 (CN)**
• **PAN, Chun**
  **Shenzhen, 518129 (CN)**

(74) Representative: **Gill Jennings & Every LLP**
**The Broadgate Tower**
**20 Primrose Street**
**London EC2A 2ES (GB)**

(54) **COMMUNICATION METHOD, COMMUNICATION APPARATUS, AND COMPUTER-READABLE STORAGE MEDIUM**

(57)    A communication method, a communication apparatus, and a computer-readable storage medium are disclosed, to increase an effective area for spatial reuse and improve a system capacity. The method includes: A sharing AP selects a first beam width used to schedule a sharing STA during coordinated transmission, and the sharing AP sends a coordinated transmission notification to a shared AP, where the coordinated transmission notification includes a coordinated transmission parameter, the coordinated transmission parameter is obtained based on the sharing STA and the first beam width, the coordinated transmission notification indicates the shared AP to select, based on the coordinated transmission parameter, a shared STA and a second beam width that are used for coordinated transmission, the second beam width is one of adjustable beam widths of the shared AP, and the first beam width is one of at least two adjustable beam widths of the sharing AP.

FIG. 1

## Description

### TECHNICAL FIELD

This application relates to the field of communication technologies, and in particular, to a communication method, a communication apparatus, and a computer-readable storage medium.

### BACKGROUND

A wireless local area network (wireless local area network, WLAN) is a wireless network access technology. A basic component of the WLAN is a basic service set (basic service set, BSS). Usually, one BSS includes one access point (access point, AP) and a plurality of stations (station, STA) that are associated with the AP in coverage of the AP. As a quantity of mobile terminals and an amount of transmitted data increase, users have increasingly high requirements for high uplink bandwidth and a low delay on a WLAN. In addition, there are increasing high-dense deployment scenarios of the WLAN, such as a campus office scenario and an industrial optical detection scenario. Because APs are deployed close to each other, co-channel interference increases and spectrum efficiency decreases. In the high-dense deployment scenario, a spatial reuse technology is used to reduce interference and coordinate a plurality of BSSs for concurrent transmission, which is a key technology that improves a system capacity.

Currently, a multi-AP coordinated spatial reuse (coordinated spatial reuse, CSR) technology is discussed in the IEEE 802.11be working group. Generally, an AP that preempts a transmission opportunity (transmission opportunity, TXOP) and allows another AP to perform coordinated transmission is referred to as a sharing AP (sharing AP), an associated STA that is scheduled by the sharing AP and that is used for coordinated transmission is referred to as a sharing STA, an AP that participates in coordinated transmission is referred to as a shared AP (shared AP), and an associated STA that is scheduled by the shared AP and that is used for coordinated transmission is referred to as a shared STA.

The sharing AP and the shared AP are neighboring co-channel APs, and there is an overlapping area between coverage of the sharing AP and coverage of the shared AP. To reduce co-channel interference caused by the shared AP or the shared STA to a transmission link of the sharing AP and the sharing STA during coordinated transmission, the shared AP needs to select the shared STA from STAs located in an area outside the overlapping area. As a result, STAs participating in the CSR are limited.

### SUMMARY

This application provides a communication method, a communication apparatus, and a computer-readable storage medium, to increase an effective area for coordinated spatial reuse.

According to a first aspect, a communication method is provided. The method includes: A sharing AP selects a first beam width used to schedule a sharing STA during coordinated transmission, and the sharing AP sends a coordinated transmission notification to a shared AP. The first beam width is one of at least two adjustable beam widths of the sharing AP. The coordinated transmission notification includes a coordinated transmission parameter, the coordinated transmission parameter is obtained based on the sharing STA and the first beam width, and the coordinated transmission notification indicates the shared AP to select, based on the coordinated transmission parameter, a shared STA and a second beam width that are used for coordinated transmission. The sharing STA is a STA in associated STAs of the sharing AP, and the shared STA is a STA in associated STAs of the shared AP. The second beam width is one of adjustable beam widths of the shared AP. The sharing AP dynamically selects, from the adjustable beam widths of the sharing AP, a beam width used for coordinated transmission, and coverage of the sharing AP can change with the beam width selected by the sharing AP, so that more STAs in the associated STAs of the shared AP have an opportunity to participate in CRS.

In a possible implementation, the coordinated transmission parameter includes at least two of the first beam width, an identifier of the sharing STA, and a first interference limit. The first interference limit indicates maximum tolerable interference to a transmission link between the sharing AP and the sharing STA at the first beam width. In this way, the shared AP can select, based on these coordinated transmission parameters, the shared STA and the second beam width that cause interference, less than the first interference limit, to the transmission link between the sharing AP and the sharing STA at the first beam width.

In a possible implementation, the coordinated transmission parameter includes an identifier of at least one candidate shared STA and/or at least one candidate second beam width. Each candidate shared STA and/or each candidate second beam width are/is selected based on the first beam width, the sharing STA, and channel measurement information. Each candidate shared STA is a STA in the associated STAs of the shared AP, each candidate second beam width is a beam width in all adjustable beam widths of the shared AP, each candidate shared STA and/or each candidate second beam width meet/meets an interference limit condition, and the channel measurement information is obtained by the sharing AP and the shared AP through measurement at different beam widths. Based on the channel measurement information obtained by the sharing AP/the shared AP through measurement at different beam widths, a candidate shared STA that meets the interference limit condition can be selected more accurately from the associated STAs of the shared AP, and a candidate second beam width that meets the interference limit condition can be selected more accurately from the adjustable beam widths of the shared AP. Therefore, the shared AP can select a shared STA that meets the interference limit condition from the candidate shared STAs, and select a second beam width that meets the interference limit condition from the candidate second beam widths. In this way, during coordinated transmission, interference between concurrent transmission links is controllable, so that a transmission rate of the concurrent transmission link can be increased, and a system capacity can be improved.

In a possible implementation, that the interference limit condition is met includes: First interference caused by a second link to a first link is less than the first interference limit of the first link. The first link is the transmission link between the sharing AP and the sharing STA at the first beam width, and the second link is a transmission link between the shared AP and the candidate shared STA at the candidate second beam width. The first interference limit indicates maximum tolerable interference to the first link. The first interference is obtained based on the channel measurement information. Therefore, interference caused by the second link to the first link during coordinated transmission can be reduced, and a success rate and a transmission rate of data transmission on the first link can be ensured.

In a possible implementation, that the interference limit condition is met further includes: A second interference limit of the second link is greater than second interference caused by the first link to the second link. The second interference limit indicates maximum tolerable interference to the second link. The second interference is obtained based on the channel measurement information. In this way, interference caused by the first link to the second link during coordinated transmission can be reduced, and a success rate and a transmission rate of data transmission on the second link can be ensured.

In a possible implementation, the sharing AP has different coverage formed on a horizontal plane at different beam widths. In this way, coverage of a beam can be changed by switching a beam width, to adjust a size of an overlapping area between the coverage of the beam and coverage of the shared AP. Therefore, an effective area of the shared AP for spatial reuse can be adjusted.

In a possible implementation, the method further includes: The sharing AP separately receives a signal from an associated STA of the sharing AP, a signal from the associated STA of the shared AP, and/or a signal from the shared AP at the at least two beam widths, to obtain the channel measurement information. The channel measurement information includes a measurement value between the sharing AP and the associated STA of the sharing AP, the associated STA of the shared AP, or the shared AP at different beam widths, and can reflect channel quality between the sharing AP and the associated STA of the sharing AP at different beam widths, and channel interference between the sharing AP and the shared AP or the associated STA of the shared AP. In this way, based on the channel measurement information, a more appropriate first beam width, a more appropriate shared STA, and a more appropriate second beam width can be selected for coordinated transmission, to better implement interference control during coordinated transmission.

In a possible implementation, that a sharing AP selects a first beam width used to schedule a sharing STA during coordinated transmission includes: The sharing AP selects the first beam width based on the sharing STA and the channel measurement information, where the channel measurement information includes a channel measurement value between the sharing AP and each associated STA of the sharing AP separately at the at least two beam widths. The channel measurement value between the sharing AP and the associated STA of the sharing AP at different beam widths can reflect channel quality between the sharing AP and each associated STA at each beam width, so that a more appropriate beam width can be selected based on the channel measurement information to schedule the sharing STA.

In a possible implementation, the channel measurement value includes a received signal strength indicator value, and the first beam width is a beam width corresponding to a largest value in at least two received signal strength indicator values between the sharing AP and the sharing STA. Generally, a larger signal strength indicator value indicates higher signal strength, and a beam width corresponding to a largest value in the signal strength indicator values is selected as the first beam width. In this case, channel quality between the sharing AP and the sharing STA is good at the first beam width, and a higher transmission rate may be achieved, so that a system capacity can be improved.

In a possible implementation, the channel measurement value includes a path loss value, and the first beam width is a beam width corresponding to a smallest value in at least two path loss values between the sharing AP and the sharing STA. Generally, a smaller path loss value indicates higher signal strength, and a beam width corresponding to a smallest value in the path loss values is selected as the first beam width. In this case, channel quality between the sharing AP and the sharing STA is good at the first beam width, and a higher transmission rate may be achieved, so that a system capacity can be improved.

According to a second aspect, a communication method is provided. The method includes: A first AP separately receives an uplink signal from an associated STA of the first AP, an uplink signal from an associated STA of a second AP, and a signal from the second AP at at least two beam widths, to obtain first channel measurement information. The first channel measurement information includes a measurement value between the firstAP and the associated STA of the firstAP, the associated STA of the second AP, and the second AP at different beam widths, and can comprehensively reflect channel quality between the firstAP and the associated STA of the firstAP at different beam widths, and channel interference between the first AP and a shared AP or an associated STA of the shared AP.

In a possible implementation, the uplink signal includes an acknowledgment frame. The acknowledgment frame has a feature of power stability or the like. Measurement is performed based on the acknowledgment frame, so that channel measurement information can be more accurate.

In a possible implementation, the method further includes: The first AP receives second channel measurement information from the secondAP. The second channel measurement information includes a channel measurement value between the second AP and the first AP and/or the associated STA of the first AP separately at the at least two beam widths. The first AP and the second AP may exchange the channel measurement information, so that the first AP can more comprehensively master interference information between the firstAP and the associated STA of the first AP and between the secondAP and the associated STA of the second AP.

In a possible implementation, the method further includes: The first AP receives a coordinated transmission notification from the second AP, where the coordinated transmission notification carries a coordinated transmission parameter, the coordinated transmission parameter is obtained based on a first STA and a first beam width, the first STA is a STA that is selected by the second AP from the associated STAs of the second AP and that is used for coordinated transmission, and the first beam width is a first beam width that is selected by the second AP from at least two adjustable beam widths of the second AP and that is used for coordinated transmission. The first AP selects, based on the coordinated transmission parameter and channel measurement information, a second beam width used for coordinated transmission from at least two adjustable beam widths of the first AP, and selects a second STA used for coordinated transmission from the associated STAs of the first AP. The channel measurement information includes the first channel measurement information and the second channel measurement information, and the second channel measurement information includes the channel measurement value between the second AP and the first AP and/or the associated STA of the first AP separately at the at least two beam widths. The second AP dynamically selects, from the adjustable beam widths of the second AP, a beam width used for coordinated transmission, and coverage of the second AP can change with the beam width selected by the second AP, so that more STAs in the associated STAs of the first AP have an opportunity to participate in CRS.

In a possible implementation, the coordinated transmission parameter includes at least two of the first beam width, an identifier of the first STA, and a first interference limit. The first interference limit indicates maximum tolerable interference to a transmission link between the secondAP and the first STA at the first beam width. Because the channel measurement information can comprehensively reflect the interference information between the firstAP and the associated STA of the first AP and between the second AP and the associated STA of the second AP at different beam widths, the first AP can accurately select, based on the channel measurement information and the coordinated transmission parameter, a second beam width and a second STA that are used for coordinated transmission, so that interference caused by a transmission link between the first AP and the second STA at the second beam width to the transmission link between the secondAP and the first STA at the first beam width is less than the first interference limit. In this way, interference between concurrent transmission links during coordinated transmission is controllable, and a success rate and a transmission rate of data transmission are ensured.

In a possible implementation, the coordinated transmission parameter includes an identifier of at least one candidate shared STA and/or at least one candidate second beam width. Each candidate shared STA and/or each candidate second beam width are/is selected based on the first beam width, the sharing STA, and the channel measurement information. Each candidate shared STA is a STA in the associated STAs of the shared AP, each candidate second beam width is a beam width in all adjustable beam widths of the shared AP, each candidate shared STA and/or each candidate second beam width meet/meets an interference limit condition, and the channel measurement information is obtained by the sharing AP and the shared AP through measurement at different beam widths. In this way, the firstAP can select, from the candidate second STAs, a second STA that meets the interference limit condition, and select, from the candidate second beam widths, a second beam width that meets the interference limit condition, so that interference between concurrent transmission links during coordinated transmission can be reduced.

In a possible implementation, interference caused by the transmission link between the second AP and the first STA at the first beam width to a transmission link between the first AP and the second STA at the second beam width is less than a second interference limit of the transmission link between the first AP and the second STA at the second beam width, and the second interference limit is obtained based on the channel measurement information. In this way, the interference caused by the transmission link between the second AP and the first STA at the first beam width to the transmission link between the firstAP and the STA at the second beam width can be reduced, and a success rate and a transmission rate of data transmission can be ensured.

In a possible implementation, the first AP has different coverage formed on a horizontal plane at different beam widths.

According to a third aspect, a communication apparatus is provided, and is used in a sharing AP. The apparatus includes a processing module and a transceiver module. The processing module is configured to select a first beam width used to schedule a sharing STA during coordinated transmission, where the first beam width is one of at least two adjustable beam widths of an antenna of the sharing AP. The transceiver module is configured to send a coordinated transmission notification to a shared AP, where the coordinated transmission notification includes a coordinated transmission parameter, the coordinated transmission parameter is obtained based on the sharing STA and the first beam width, the coordinated transmission notification indicates the shared AP to select, based on the coordinated transmission parameter, a shared STA and a second beam width that are used for coordinated transmission, and the second beam width is one of adjustable beam widths of an antenna of the shared AP.

In a possible implementation, the coordinated transmission parameter includes at least two of the first beam width, an identifier of the sharing STA, and a first interference limit, so that the shared AP selects the shared STA and the second beam width based on the coordinated transmission parameter and channel measurement information. The first interference limit indicates maximum tolerable interference to a transmission link between the sharing AP and the sharing STA at the first beam width, and the channel measurement information is obtained by the sharing AP and/or the shared AP through measurement at different beam widths.

In a possible implementation, the coordinated transmission parameter includes an identifier of a candidate shared STA and/or a candidate second beam width, the candidate shared STA and/or the candidate second beam width are/is selected based on the first beam width, the sharing STA, and channel measurement information, the candidate shared STA includes at least one STA in associated STAs of the shared AP, the candidate second beam width includes at least one beam width in all adjustable beam widths of the shared AP, the candidate shared STA and/or the candidate second beam width meet/meets an interference limit condition, and the channel measurement information is obtained by the sharing AP and/or the shared AP through measurement at different beam widths.

In a possible implementation, that the interference limit condition is met includes: First interference caused by a second link to a first link is less than the first interference limit of the first link. The first link is the transmission link between the sharing AP and the sharing STA at the first beam width, the second link is a transmission link between the shared AP and the candidate shared STA at the candidate second beam width, and the first interference is obtained based on the channel measurement information.

In a possible implementation, that the interference limit condition is met further includes: A second interference limit of the second link is greater than second interference caused by the first link to the second link. The second interference is obtained based on the channel measurement information.

In a possible implementation, the antenna has different coverage on a horizontal plane at different beam widths.

In a possible implementation, the transceiver module is configured to separately receive a signal from an associated STA of the sharing AP, a signal from the associated STA of the shared AP, and/or a signal from the shared AP at the at least two beam widths, to obtain the channel measurement information.

According to a fourth aspect, a communication apparatus is provided. The apparatus is used in a first AP, and the apparatus includes a transceiver module. The transceiver module is configured to separately receive an uplink signal from an associated STA of a first AP, an uplink signal from an associated STA of a second AP, and a signal from the second AP at at least two beam widths, to obtain first channel measurement information.

In a possible implementation, the uplink signal includes an acknowledgment frame.

In a possible implementation, the transceiver module is configured to receive second channel measurement information from the second AP. The second channel measurement information includes a channel measurement value between the second AP and the first AP and/or the associated STA of the first AP separately at the at least two beam widths.

In a possible implementation, the apparatus further includes a processing module. The transceiver module is configured to receive a coordinated transmission notification from the second AP. The coordinated transmission notification carries a coordinated transmission parameter, and the coordinated transmission parameter is obtained based on a first STA and a first beam width. The first STA is a STA that is selected by the second AP from the associated STAs of the second AP and that is used for coordinated transmission, and the first beam width is a first beam width that is selected by the second AP from at least two adjustable beam widths of the second AP and that is used for coordinated transmission. The processing module is configured to: select, based on the coordinated transmission parameter and channel measurement information, a second beam width used for coordinated transmission from at least two adjustable beam widths of the first AP, and select a second STA used for coordinated transmission from the associated STAs. The channel measurement information includes the first channel measurement information and the second channel measurement information, and the second channel measurement information includes a channel measurement value between the second AP and the first AP and/or the associated STA of the first AP separately at the at least two beam widths.

In a possible implementation, the coordinated transmission parameter includes at least two of the first beam width, an identifier of the first STA, and a first interference limit. The first interference limit indicates maximum tolerable interference to a transmission link between the second AP and the first STA at the first beam width.

In a possible implementation, the coordinated transmission parameter includes an identifier of at least one candidate shared STA and/or at least one candidate second beam width. Each candidate shared STA and/or each candidate second beam width are/is selected based on the first beam width, the sharing STA, and the channel measurement information. Each candidate shared STA is a STA in the associated STAs of the shared AP, each candidate second beam width is a beam width in all adjustable beam widths of the shared AP, each candidate shared STA and/or each candidate second beam width meet/meets an interference limit condition, and the channel measurement information is obtained by the sharing AP and the shared AP through measurement at different beam widths.

In a possible implementation, interference caused by the transmission link between the secondAP and the first STA at the first beam width to a transmission link between the first AP and the second STA at the second beam width is less than a second interference limit of the transmission link between the firstAP and the second STA at the second beam width. The second interference limit is obtained based on the channel measurement information.

In a possible implementation, the first AP has different coverage formed on a horizontal plane at different beam widths.

According to a fifth aspect, a communication apparatus is provided. The apparatus includes a processor and a communication interface. The communication interface is configured to communicate with another communication apparatus. The processor is configured to run a group of instructions, to implement the channel measurement method according to any one of the first aspect or the possible implementations of the first aspect, or any one of the second aspect or the possible implementations of the second aspect.

According to a sixth aspect, a computer-readable storage medium is provided. The computer-readable storage medium includes instructions. When the computer-readable storage medium is run on a computer, the computer is enabled to implement the communication method according to any one of the first aspect or the possible implementations of the first aspect, or any one of the second aspect or the possible implementations of the second aspect.

## BRIEF DESCRIPTION OF DRAWINGS

FIG. 1 is a schematic diagram of a structure of a WLAN system according to this application;
FIG. 2 is a schematic diagram of a structure of an AP with an adjustable beam width according to this application;
FIG. 3 is a schematic diagram of a structure of another WLAN system according to this application;
FIG. 4a is a schematic diagram of a possible AP deployment scenario according to this application;
FIG. 4b is a schematic diagram of another possible AP deployment scenario according to this application;
FIG. 5 is a schematic flowchart of coordinated transmission between APs according to this application;
FIG. 6 is a schematic flowchart of a channel measurement method according to this application;
FIG. 7 is a schematic flowchart of another channel measurement method according to this application;
FIG. 8 is a schematic flowchart of a communication method according to this application;
FIG. 9a is a schematic diagram of a scenario of a transmission direction of two transmission links during coordinated transmission according to this application;
FIG. 9b is a schematic diagram of a scenario of another transmission direction of two transmission links during coordinated transmission according to this application;
FIG. 9c is a schematic diagram of a scenario of still another transmission direction of two transmission links during coordinated transmission according to this application;
FIG. 10 is a schematic diagram of a structure of a communication apparatus according to this application; and
FIG. 11 is a schematic diagram of a structure of another communication apparatus according to this application.

## DESCRIPTION OF EMBODIMENTS

This application provides a communication method, a communication apparatus, and a computer-readable storage medium, to increase an effective area for coordinated spatial reuse.

Data traffic rapidly grows with development of the mobile Internet and popularization of smart terminals. A wireless local area network (wireless local area network, WLAN) with advantages of a high rate and low costs has become one of mainstream mobile broadband access technologies. With continuous increase of user equipment and continuous development of internet of things (Internet of things, IoT) requirements, a high-dense deployment scenario (high-dense deployment scenario) becomes one of core scenarios of a wireless network. High-dense deployment is deployment of a large quantity of wireless access points (access point, AP) and a large quantity of active stations (stations, STAs) in limited geographical coverage. The high-dense deployment rapidly increases a demand for transmission resources.

The communication method in the wireless local area network provided in this application may be applied to a 4th generation (4th generation, 4G) communication system, for example, long term evolution (long term evolution, LTE), or may be applied to a 5th generation (5th generation, 5G) communication system, for example, 5G new radio (new radio, NR), or may be applied to various future communication systems.

The communication method provided in this application may be applied to a WLAN system, and is applicable to an IEEE 802.11 system standard, for example, the IEEE 802.11be draft standard, or a next-generation standard or a further-generation standard thereof.

The following describes embodiments provided in this application in detail with reference to accompanying drawings.

A WLAN system 100 to which this embodiment is applicable may include a plurality of stations (stations, STAs). The plurality of STAs include an AP and further include a non-AP STA. Alternatively, the WLAN system 100 may include one or more APs and one or more non-AP STAs. In embodiments of this application, the non-AP STA may be briefly referred to as a STA. The AP may be associated with one or more STAs. The AP may schedule a transmission resource for the STA associated with the AP, and communicate with a scheduled STA on the scheduled transmission resource. The AP may be connected to a distributed system (distributed system, DS). It may be understood that "a plurality of" mentioned in this application may mean two or more, or greater than or equal to two. It may be further understood that "multi-AP" mentioned in this application is short for "a plurality of APs", and "multi-STA" is short for "a plurality of STAs".

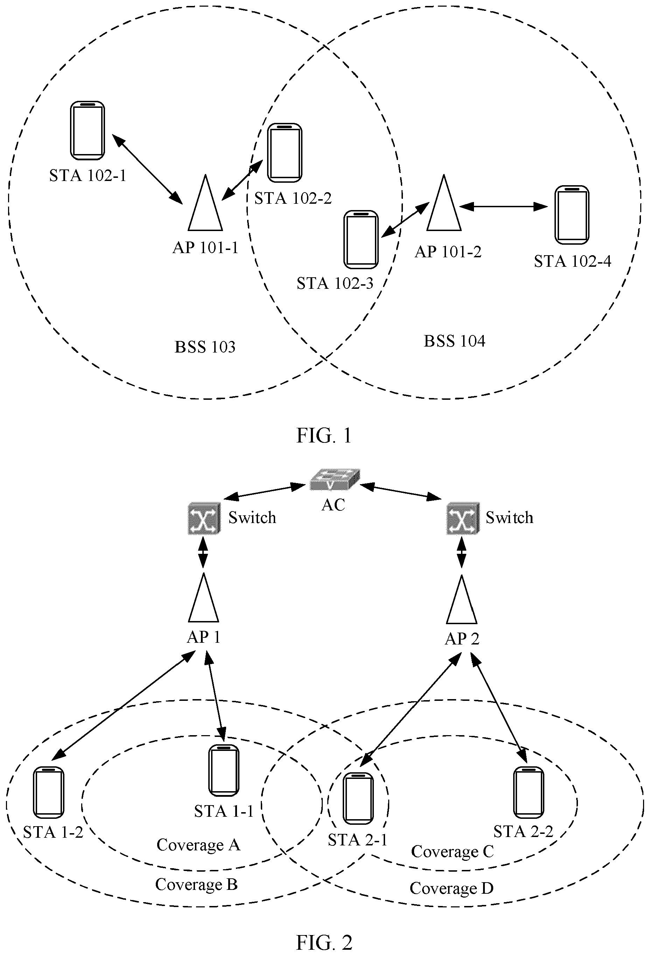

As shown in FIG. 1, the WLAN system 100 may include a plurality of APs and a plurality of STAs. In FIG. 1, two APs are used as an example, and an example in which each AP is connected to two STAs is used for description. It may be understood that the WLAN system may further include more APs and more STAs. In FIG. 1, two APs are respectively represented by an AP 101-1 and an AP 101-2, and two STAs connected to the AP 101-1 are represented by a STA 102-1 and a STA 102-2. Two STAs connected to the AP 101-2 are represented by a STA 102-3 and a STA 102-4. The AP 101-1 may be associated with the STA 102-1 and the STA 102-2, and may serve the STA 102-1 and the STA 102-2. The AP 101-1 is a serving AP of the STA 102-1 and the STA 102-2. The AP 101-2 is associated with the STA 102-3 and the STA 102-4, and may serve the STA 102-3 and the STA 102-4. The AP 101-2 is a serving AP of the STA 102-3 and the STA 102-4.

To better understand the solutions provided in this application, the following describes related concepts in the WLAN system in embodiments of this application.

An AP is an entity having a STA function, and may provide access to a delivery service for an associated STA via a wireless medium (wireless medium, WM). The AP may include a STA and a distributed system access function (distribution system access function, DSAF). The AP may also be referred to as a wireless access point, a bridge, or a hotspot. The AP may access a server or a communication network. The AP may be used as a hub of the WLAN system. The AP may be a base station, a router, a gateway, a repeater, a communication server, a switch, a bridge, or the like. For ease of description herein, the foregoing devices are collectively referred to as APs in embodiments of this application.

A STA is a logical entity that is a non-AP station herein, which is a single addressable instance of a medium access control (medium access control, MAC) layer and physical layer (physical layer, PHY) interface for accessing a wireless medium. The STAs may be various user terminals, user apparatuses, access apparatuses, subscriber stations, subscriber units, mobile stations, user agents, user devices, or other devices that have a wireless communication function. The user terminals may include various handheld devices, vehicle-mounted devices, wearable devices, computing devices that have the wireless communication function, or other processing devices connected to a wireless modem, and include various forms of user equipments (user equipments, UE), mobile stations (mobile stations, MSs), terminals (terminals), terminal equipments (terminal equipments), portable communication devices, handheld devices, portable computing devices, entertainment devices, game devices or systems, and global positioning system devices, or any other suitable device configured to perform network communication via wireless media. For ease of description herein, the foregoing devices are collectively referred to as STAs in embodiments of this application.

A transmission opportunity (transmission opportunity, TXOP) is a basic unit in wireless channel access. The TXOP includes an initial time point and maximum duration (TXOP limit). In the TXOP limit, a station that obtains the TXOP may not perform channel contention again, and continuously use a channel to transmit a plurality of data frames. The TXOP may be obtained through contention or hybrid coordinator (hybrid coordinator, HC) allocation. The TXOP obtained through contention may be referred to as an enhanced distributed channel access (enhanced distributed channel access, EDCA) TXOP. The TXOP obtained through HC allocation may be referred to as a hybrid coordination function controlled channel access (hybrid coordination function controlled channel access, HCCA) TXOP. It should be understood that this application does not include obtaining of the TXOP. For specific details of a manner of obtaining the TXOP, refer to the conventional technology.

In the WLAN system, each AP and a STA associated with the AP may form a basic service set (basic service set, BSS). For example, in FIG. 1, the AP 101-1, the STA 102-1, and the STA 102-2 may form a BSS 103, and the AP 101-2, the STA 102-3, and the STA 102-4 may form a BSS 104. An AP that does not belong to a same BSS is a non-associated AP, and a STA that does not belong to a same BSS is a non-associated STA. For example, in FIG. 1, the AP 101-1 is a non-associated AP of the STA 102-3 and the STA 102-4, and the STA 102-3 and the STA 102-4 are non-associated STAs of the AP 101-1. A relationship between the STA 102-1, the STA 102-2, and the AP 101-2 is similar. A plurality of BSSs may use same transmission resources, so that utilization of transmission resources of a wireless local area network can be improved. APs in different BSSs may implement coordinated transmission by using same transmission resources in a coordinated manner.

With an increase in a usage range and a quantity of STAs, APs deployed in the WLAN are increasingly dense to enable a wireless network to cover all STAs. Therefore, coverage of a plurality of co-channel BSSs (BSSs to which a plurality of co-channelAPs belong are co-channel BSSs of each other) may overlap, to form an overlap basic service set (overlap basic service set, OBSS for short). To be specific, the plurality of APs with overlapping coverage transmit downlink signals to STAs associated with the APs on a same channel, or a plurality of STAs transmit uplink signals to APs associated with the STAs on a same channel. For example, in FIG. 1, theAP 101-1 and theAP 101-2 are co-channel APs, and therefore, the BSS 103 and the BSS 104 that have overlapping coverage are OBSSs of each other. It should be understood that FIG. 1 is merely an example and should not constitute a limitation on a network architecture of a wireless local area network to which this application is applicable. For example, the network architecture may alternatively include more BSSs, each BSS may alternatively include more STAs, or some BSSs may alternatively not include anAP. An area in which a plurality of BSSs overlap may alternatively include more STAs, or the like. This is not limited herein in embodiments of this application.

Coordinated transmission means that in a WLAN system, two or more APs serve different STAs on same transmission resources, including uplink (uplink, UL) transmission and/or downlink (downlink, DL) transmission. A multi-AP coordinated transmission manner is coordinated spatial reuse (coordinated spatial reuse, CSR). This application is applicable to a coordinated transmission manner of CSR.

When a plurality of APs perform coordinated transmission, an AP that preempts a TXOP is usually referred to as a sharing AP (sharing AP). An AP that performs coordinated transmission with the sharing AP is referred to as a shared AP (shared AP). The sharing AP and the shared AP are co-channel APs. Certainly, the sharing AP may also be referred to as a primary AP or another name, and the shared AP may also be referred to as a secondary AP or another name. In a next TXOP, the sharing AP may be the same AP, or may change. A STA that participates in coordinated transmission in the STAs associated with the sharing AP may be referred to as a sharing STA, and a STA that participates in coordinated transmission in the STAs associated with the shared AP may be referred to as a shared STA.

In this embodiment, the sharing AP and one or more shared APs perform coordinated transmission on a channel. For example, a bandwidth of the channel for coordinated transmission may be 20 MHz, 40 MHz, 80 MHz, 160 MHz, 240 MHz, 320 MHz, or another bandwidth supported in the WLAN. It is assumed that the bandwidth of the channel for coordinated transmission is 80 MHz, the sharing AP and one or more shared APs perform coordinated transmission on the 80 MHz channel, and both the sharing AP and the shared AP may use the 80 MHz channel.

The AP may use an orthogonal frequency division multiple access (orthogonal frequency division multiple access, OFDMA) technology to allocate resources to the associated STA. The OFDMA technology further divides a time-frequency resource of an air interface radio channel into a plurality of orthogonal resources. A unit of the orthogonal resource is referred to as a resource unit (resource unit, RU). When allocating resources to the STA, the AP may perform allocation based on orthogonal resources. For example, theAP may perform allocation based on an RU, or may perform allocation based on an RU group. The AP allocates different orthogonal resources to different STAs at a same moment, so that a plurality of STAs efficiently access a channel.

When the plurality of APs perform coordinated transmission, the sharing AP may allocate a channel to one STA associated with the shared AP, or allocate, based on the OFDMA technology, a channel to a plurality of STAs associated with the sharing AP. The shared AP may also allocate a channel to one STA associated with the sharedAP, or allocate, based on the OFDMA technology, a channel to a plurality of STAs associated with the shared AP.

That the sharing AP and the shared AP perform coordinated transmission on a channel means that both the sharing AP and the shared AP can use the entire channel. How the sharing AP and the shared AP specifically allocate an RU of the channel to a STA is not limited in embodiments of this application. The sharing AP and the shared AP may allocate some or all of resources of the channel to the sharing STA and the shared STA that are being scheduled.

For example, two APs perform coordinated transmission. In the WLAN system shown in FIG. 1, the AP 101-1 and the AP 101-2 may perform coordinated transmission by using same transmission resources. The transmission resource may use a channel as a granularity or an RU as a granularity. For example, when the transmission resource uses a channel as a granularity, the AP 101-1 and the AP 101-2 use a same channel to perform coordinated transmission. It is assumed that the bandwidth of the channel for coordinated transmission is 80 MHz, and both the AP 101-1 and the AP 101-2 may use the channel with an 80 MHz bandwidth. The AP 101-1 may allocate all of the channel with the 80 MHz bandwidth to the STA 102-1 or the STA 102-2 (single-STA scheduling), or allocate some of the channel to the STA 102-1 and some of the channel to the STA 102-2 (multi-STA scheduling). Alternatively, the AP 101-2 may allocate all of the channel with the 80 MHz bandwidth to the STA 102-3 or the STA 102-4, or allocate some of the channel to the STA 102-3 and some of the channel to the STA 102-4. On a channel for coordinated transmission, the AP 101-1 may communicate with the STA 102-1/STA 102-2, and the AP 101-2 may communicate with the STA 102-3/STA 102-4.

During coordinated transmission, a transmission link between the sharing AP and the sharing STA and a transmission link between the shared AP and the shared STA use same or partially same time-frequency resources (which may be simply understood as using a same channel in a same time period) for transmission, and co-channel interference exists between two concurrent transmission links. When coverage of the sharing AP overlaps coverage of the shared AP, that is, when a BSS to which the sharing AP belongs and a BSS to which the shared AP belongs are OBSSs of each other, if a STA located in an overlapping area participates in coordinated transmission, severe co-channel interference is introduced. Therefore, to reduce interference, when the shared AP selects, from the STAs associated with the shared AP, a STA participating in coordinated transmission, the shared AP does not select a STA located in the overlapping area. When the overlapping area between the sharing AP and the shared AP is large, and a large quantity of STAs in the STAs associated with the shared AP are located in the overlapping area, STAs that can participate in coordinated transmission in the STAs associated with the shared AP are limited.

In addition, to reduce interference between concurrent transmission links, in a current solution, the sharing AP and the shared AP negotiate a transmit power, and the shared AP (downlink scheduling) or the shared STA (uplink scheduling) usually needs to reduce the transmit power. This causes signal strength to be weakened, and affects a transmission rate between the shared AP and the shared STA. In addition, if a transmission direction between the shared AP and the shared STA is an uplink direction, the shared AP needs to control a transmit power of the shared STA. However, in practice, effect of regulating the transmit power of the STA is not ideal. For example, some STAs do not support or do not respond to an indication that is sent by theAP to the STA to adjust the transmit power. For another example, even if the STA can respond to the indication that is sent by the AP to the STA to adjust the transmit power, because of a difference in specifications of radio frequency modules, transmit power adjustment may be inaccurate. As a result, interference between concurrent transmission links is uncontrollable, a coordinated transmission rate is affected accordingly, and a system capacity is reduced.

Therefore, this application provides the following embodiments, to increase a CRS effective area and a throughput of coordinated transmission, so that more STAs in the STAs associated with the shared AP have an opportunity to participate in coordinated transmission.

The WLAN system in this embodiment includes at least one AP with an adjustable beam width. The AP with an adjustable beam width is an AP that has a plurality of beam widths and can switch a working beam width to a specified beam width in the plurality of beam widths. The APs in the WLAN system may have a same size and quantity of beam widths or may have different sizes and quantities of beam widths. FIG. 2 is a schematic diagram of a structure of another WLAN system according to this application. In FIG. 2, an example in which the WLAN system includes two APs, the two APs are APs with adjustable beam widths, and each AP is associated with two STAs is used for description. It may be understood that the WLAN system may further include more APs and more STAs, and some or all of the APs in the WLAN system may be APs with adjustable beam widths. This is not limited herein. In FIG. 2, the two APs are respectively represented by an AP 1 and an AP 2. STAs associated with the AP 1 are represented by a STA 1-1 and a STA 1-2. STAs associated with the AP 2 are represented by a STA 2-1 and a STA 2-2. The AP 1, the STA 1-1, and the STA 1-2 belong to a BSS 1, and the AP 2, the STA 2-1, and the STA 2-2 belong to a BSS 2.

A plurality of APs in the WLAN system may be connected to a controller (access controller, AC) by using a switch, and the APs may exchange information by using the switch and the controller. A networking manner in FIG. 2 is merely used as an example. The plurality of APs may be connected to the controller by using a same switch, or the controller and the switch may be integrated into a network device. This is not limited herein.

Embodiments in this solution are implemented based on the AP with an adjustable beam width. For brevity of description, the AP with an adjustable beam width is sometimes referred to as an AP below. When the WLAN system further includes an AP with a non-adjustable beam width, for related operations of the AP with a non-adjustable beam width in scenarios such as channel measurement and coordinated transmission, refer to the related conventional technology. This is not described in this application.

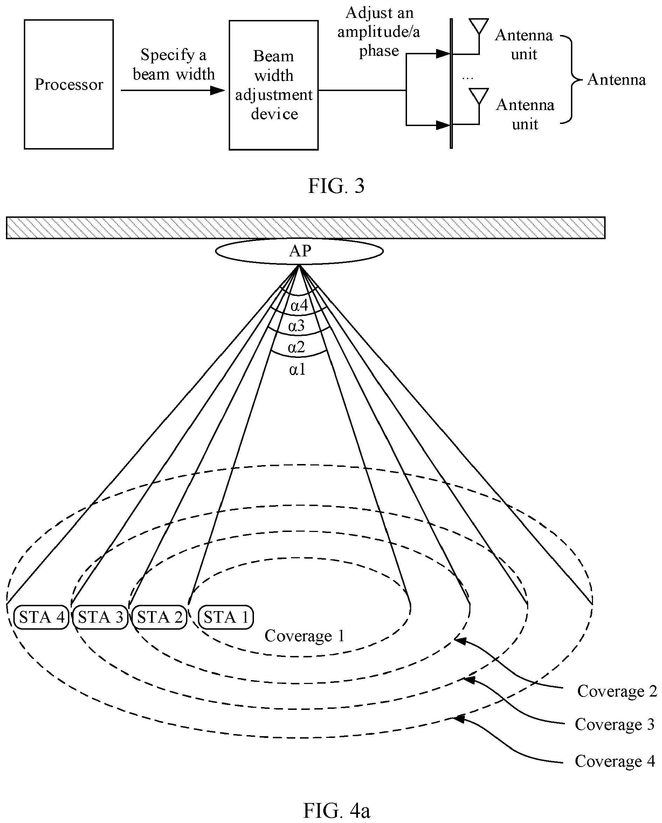

FIG. 3 is a schematic diagram of a structure of an AP with an adjustable beam width according to this application. Specifically, the AP with an adjustable beam width includes an antenna, a processor, and a beam width adjustment device. The antenna has at least two adjustable beam widths. A quantity of adjustable beam widths of the antenna may be 2, 3, 4, 6, 10, or more. Each beam width is greater than 0 degrees and less than or equal to 180 degrees. The processor is configured to select one of all adjustable beam widths of the antenna to receive an uplink signal or send a downlink signal. The antenna includes at least two antenna elements. The beam width adjustment device is configured to adjust an amplitude and a phase of a radio frequency signal fed into each antenna element, so that the antenna receives and transmits a signal at a beam width specified by the processor. The beam width adjustment device is, for example, a phase adjuster, a phase shifter, a gain adjuster, or a precoder.

In an antenna pattern, an angle between two points at which radiation intensity decreases by 3 decibels (dB) on both sides in a maximum radiation direction, that is, a power density decreases by half, is defined as a beam width, which is also referred to as a 3 dB beam width or a half power beam width (half power beam width, HPBW). A larger beam width of the antenna indicates larger beam coverage, a larger antenna gain at an edge of the coverage, higher signal strength, greater interference to the AP and the STA of the OBSS at a same transmit power, and greater interference received from the AP and the STA of the OBSS. A smaller beam width of the antenna indicates smaller beam coverage. According to an energy conservation principle of antenna radiation, beam radiation energy is more concentrated in the maximum radiation direction, the antenna gain at the edge of the coverage is smaller, the signal strength is lower, the interference to the AP and the STA of the OBSS is smaller at the same transmit power, and the interference received from the AP and the STA of the OBSS is smaller

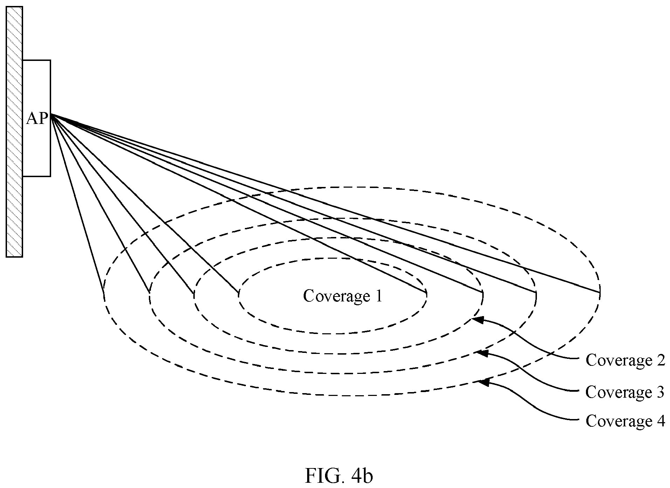

In an actual application scenario, the AP is usually highly-mounted in a place. A specific highly-mounting manner is, for example, ceiling mounting, wall mounting, or pole mounting. A radiation direction of the antenna of the AP points to the ground, so that the AP can serve the STA in the place. With reference to a deployment scenario of the AP, the beam width may also be explained as a pitch angle corresponding to coverage (referred to as 3 dB coverage for short below) formed by a 3 dB decrease in antenna radiation intensity, and the pitch angle is an angle formed by connection lines of two endpoints of a largest diameter of the 3 dB coverage to the AP separately. As shown in FIG. 4a and FIG. 4b, the AP in FIG. 4a is deployed on a ceiling, and the AP in FIG. 4b is deployed on a wall. Dashed lines in the figure represent coverage of the AP on a horizontal plane at different beam widths, and different beam widths correspond to different sizes of coverage. A quantity and sizes of beam widths in FIG. 4a and FIG. 4b are merely used as examples. The quantity and the sizes of beam widths are determined based on an actual situation of the antenna of the AP. This is not limited herein. For example, the coverage in FIG. 4a is 3 dB coverage. Pitch angles (beam widths) corresponding to coverage 1 to coverage 4 are sequentially $\alpha 1$ to $\alpha 4$. Values of the pitch angles are ranked as follows: $\alpha 1 < \alpha 2 < \alpha 3 < \alpha 4$, sizes of the 3 dB coverage are ranked as follows: Coverage 1 < Coverage 2 < Coverage 3 < Coverage 4, and antenna gains at the edges of the 3 dB coverage are as follows: Coverage 4 < Coverage 3 < Coverage 2 < Coverage 1.

In the plurality of beam widths of the AP, on a premise that it is ensured that the STA is covered, a smaller beam width may indicate better quality of a transmission link between the AP and the STA. For example, in FIG. 4a, the AP covers the STA 1 at the beam widths $\alpha 1$ to $\alpha 4$. Because the AP has a largest antenna gain and highest signal strength at the beam width $\alpha 1$, when the STA 1 is scheduled, the beam width $\alpha 1$ may be an optimal beam width. The AP does not cover the STA 2 at the beam width $\alpha 1$, and covers the STA 2 at the beam widths $\alpha 2$ to $\alpha 4$. When the STA 2 is scheduled, the beam width $\alpha 2$ may be an optimal beam width. Similarly, when a STA 3 is scheduled, the beam width $\alpha 3$ may be an optimal beam width. When the STA 4 is scheduled, it needs to be ensured that the coverage of the AP can cover the STA 4, and the beam width $\alpha 4$ may be an optimal beam width.

In this embodiment, the maximum radiation directions of the antenna at different beam widths are the same or roughly the same. That is, when the AP switches between different beam widths, the beam width changes but a beam direction remains unchanged. In addition, a maximum radiation direction of the beam may be perpendicular to a horizontal plane, or may have a specific tilt angle with the horizontal plane, and is determined based on a location and a posture of the AP during actual deployment. This is not limited herein. In this embodiment, a meaning of the AP or the antenna at a beam width or a meaning of the AP at a beam width is the same as a meaning of data transmission performed by the AP by using the beam width.

When performing uplink or downlink scheduling on a STA associated with the AP, the AP may select an appropriate beam width for the scheduled STA to perform scheduling, so as to maximize an antenna gain, and minimize interference to the OBSS in the WLAN system. For example, as shown in FIG. 2, coverage A in FIG. 2 represents coverage of an antenna of the AP 1 at a beam width $\beta 1$, and coverage B represents coverage of the antenna of the AP 1 at a beam width $\beta 2$. The STA 1-1 is close to the AP 1, and is located in the coverage A and the coverage B. The STA 1-2 is far from the AP 1, and is located in the coverage B but outside the coverage A. When the AP 1 schedules the STA 1-1, the beam width $\beta 1$ may be used, so that interference to the AP 2, the STA 2-1, and the STA 2-2 can be further reduced while the antenna gain is increased. When the AP 1 schedules the STA 1-2, the beam width $\beta 2$ may be used, so as to ensure that the coverage of the AP 1 can cover the STA 1-2. Similarly, when the AP 2 schedules a STA associated with the AP 2, the AP 2 selects an appropriate beam width for the scheduled STA to perform scheduling.

In a coordinated transmission scenario, if the sharing AP is an AP with an adjustable beam width, a beam width used when the sharing STA is scheduled is flexibly selected, so that more STAs in the BSS to which the shared AP belongs have an opportunity to participate in coordinated transmission. For example, in FIG. 2, the AP 1 is a sharing AP, and the AP 2 is a shared AP. The coverage C represents coverage of the antenna of the AP 2 at a beam width $\beta 3$, and both STA 2-1 and STA 2-2 are located in the coverage C, but STA 2-1 is still located in the coverage B of the AP 1. During coordinated transmission, if a STA scheduled by the AP 1 is the STA 1-1, the AP 1 may perform data transmission with the STA 1-1 by using the beam width $\beta 1$. In this case, the beam width of the AP 1 corresponds to the coverage A, overlapping coverage of the AP 1 and the AP 2 becomes smaller, the STA 2-1 is located outside the coverage A of the AP 1, and interference between the STA 2-1 and the AP 1 becomes smaller In this case, when the AP 2 selects, from the STAs associated with the AP 2, the shared STA that participates in coordinated transmission, the STA 2-1 has an opportunity to be selected to participate in coordinated transmission.

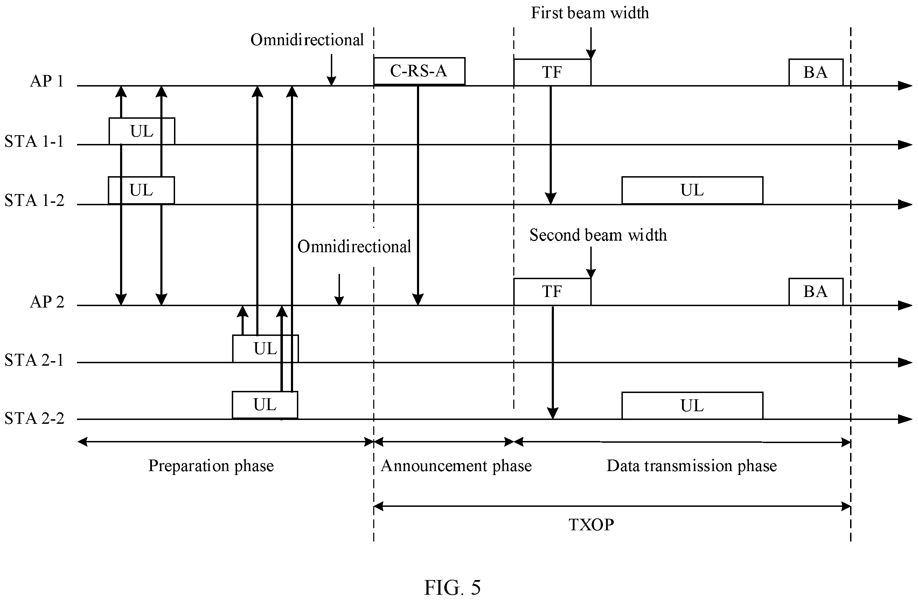

The following describes in detail a method for implementing coordinated transmission when the AP with an adjustable beam width participates in coordinated transmission. Coordinated transmission may be divided into three phases, namely, a preparation phase, an announcement phase, and a data transmission phase. As shown in FIG. 5, in the preparation phase, APs in a WLAN system measures channel measurement information between the AP and a STA and between the AP and another AP. In the announcement phase, a sharing AP that preempts a TXOP in the WLAN system determines a sharing STA that participates in coordinated transmission, and determines, based on the channel measurement information, a first beam width that is used when the sharing STA is scheduled. The sharing AP sends, based on the determined STA and the determined beam width, a coordinated transmission notification to a shared AP, to indicate the shared AP to select a shared STA that participates in coordinated transmission and the first beam width that is used when the shared STA is scheduled. In the data transmission phase, the sharing AP performs parallel data transmission on a transmission link between the sharing AP and the sharing STA at the first beam width, and the shared AP performs parallel data transmission on a transmission link between the sharedAP and the shared STA at a second beam width.

Specifically, in the preparation phase, the AP separately performs channel measurement with a plurality of STAs and co-channel APs at different beam widths, to obtain the channel measurement information. The channel measurement information includes, for example, a channel measurement value between the AP and each STA in a BSS to which the AP belongs at different beam widths, and a channel measurement value between the AP and an AP in an OBSS and each STA. The channel measurement value may be a received signal strength indicator (receive signal strength indicator, RSSI), a path loss (path loss, PL) value, a signal to interference noise ratio (signal to interference noise ratio, SINR) value, or the like.

To improve channel detection efficiency and reduce channel detection overheads, a plurality of APs in the WLAN system may perform coordinated measurement. To be specific, after negotiation, the plurality of APs synchronously send a downlink signal used for measurement, or receive an uplink signal, to measure a channel and obtain channel measurement data. In addition, after obtaining respective channel measurement information, the APs exchange the respective channel measurement information, so that the APs can master channel measurement information in the BSS to which the APs belong and channel measurement information between the BSS to which the APs belong and the OBSS. Channel measurement information between a BSS and an OBSS of the BSS is interference measurement information, and may include channel measurement values (interference measurement values) between the AP in the BSS and the AP in the OBSS and each STA at different beam widths, and interference measurement values between the AP in the OBSS and the AP in the BSS and each STA at different beam widths.

There are a plurality of methods in which the AP obtains the channel measurement information between the AP and the STA. This embodiment provides two measurement methods. Channel measurement may be further implemented between the AP and the STA in another manner. This application is not limited thereto. Measurement method 1: The AP measures the channel measurement information. Specifically, the AP may separately receive uplink (up link, UL) signals from an associated STA and a non-associated STA (a STA in the OBSS) at different beam widths, to obtain a channel measurement value between the AP and each STA. Measurement method 2: The STA measures the channel measurement information. Specifically, the AP separately sends a downlink (down link, DL) signal at different beam widths, and the associated STA and the non-associated STA receive the downlink signal to obtain a channel measurement value, and report respective channel measurement values to respective associated APs, so that the AP can obtain a channel measurement value between the AP and each STA. The following describes the two measurement methods in detail with reference to the accompanying drawings. In this embodiment, an uplink signal and an uplink frame are often used alternately, and a downlink signal and a downlink frame are often used interchangeably.

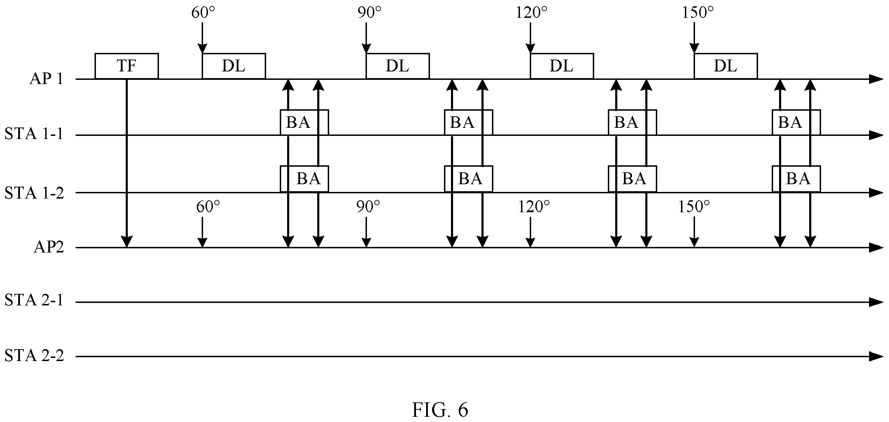

FIG. 6 is a schematic flowchart of a channel measurement method according to this application. FIG. 6 shows channel measurement values that are between the AP and the associated STA and the non-associated STA and that are measured based on the uplink frame at different antenna beam widths. In FIG. 5, coordinated measurement of the AP 1 and the AP 2 is used as an example. It is assumed that antennas of the AP 1 and the AP 2 both support four beam widths: 60 degrees, 90 degrees, 120 degrees, and 150 degrees. Certainly, moreAPs may participate in coordinated measurement, and theAP 1 and theAP 2 may further support other beam widths of different sizes and quantities. In a measurement phase, there is no primary/secondary relationship betweenAPs in the WLAN system.

All uplink frames sent by the STA, such as a management frame, a control frame, and a data frame, can be used by the AP for channel measurement to obtain the channel measurement value. The uplink frame sent by the STA may be actively sent by the STA, or may be sent by the AP through triggering. Descriptions are provided below by using an example in which the AP triggers the STA to send the uplink frame to measure a channel.

The AP 1 periodically sends an indication frame to the AP 2, to notify the AP 2 to prepare to receive uplink frames from the STA 1-1 and the STA 1-2 associated with theAP 1. The indication frame may be a management frame like a trigger frame (trigger frame, TF) or a beacon (beacon) frame. Optionally, the indication frame may carry a time interval for switching a beam width, so that the AP 1 and the AP 2 can synchronously switch the beam width. After a short inter-frame space (Short inter-frame space, SIFS), the AP 1 switches the antenna beam width in sequence and sends the downlink frame to the associated STA 1-1 and STA 1-2. The downlink frame may be a data frame, so as to trigger the STA to reply with an acknowledgment frame. The acknowledgment frame may be a block acknowledgment (block Acknowledgment, BA) frame, or may be anACK frame. A transmit power of the BA frame is stable, a modulation and coding scheme (modulation and coding scheme, MCS) and a control flow do not change greatly, and measurement data obtained through measurement based on the BA frame is more stable and accurate. To reduce overheads, the downlink frame may be a null frame or a short data frame. Certainly, the downlink frame may alternatively be a beacon frame or the like. The STA 1 and the STA 1-2 reply with an uplink frame for the downlink frame. After receiving the uplink frames from the STA 1-1 and the STA 1-2 at corresponding beam widths, the AP 1 reads an RSSI value as a channel measurement value between the AP 1 and a corresponding STA at a current beam width. At the same time, the AP 2 switches the antenna beam width in sequence, receives the uplink frames from the STA 1-1 and the STA 1-2, and reads the RSSI value as a channel measurement value between the AP 2 and a corresponding STA at the current beam width. The AP 1 and the AP 2 switch the beam width at a same interval, so that the AP 1 and the AP 2 can measure a same quantity of beam widths within a measurement period, to improve measurement efficiency. A measurement manner of the AP 2 is similar to that of the AP 1, and therefore details are not described herein again. The AP 2 may send the downlink frame simultaneously with the AP 1, or the AP 1 and the AP 2 may temporarily not switch the beam width after the AP 1 sends the downlink frame, and the AP 2 sends the downlink frame to the associated STA. After receiving the uplink frame of the associated STA of the AP 2, the AP 1 and the AP 2 sequentially switch the beam width, to complete measurement of other beam widths. Certainly, the AP 1 and the AP 2 may alternatively complete measurement of all beam widths of the AP 1 and the AP 2 in different time periods separately. This is not limited herein.

For example, the AP 1 and the AP 2 switch the beam width to 60°, and the AP 1 sends a downlink frame 1 to the STA 1-1 and the STA 1-2. The STA 1-1 and the STA 1-2 reply with an uplink frame 1 for the downlink frame 1. The AP 1 and the AP 2 respectively receive the uplink frame 1 at the beam width of 60°. The AP 1 may obtain $RSSI_{STA1-1}^{AP1}\left(60°\right)$ between the AP 1 and the STA 1-1 and $RSSI_{STA1-2}^{AP1}\left(60°\right)$ between the AP 1 and the STA 1-2 at the beam width of 60°, and the AP 2 may obtain $RSSI_{STA1-1}^{AP2}\left(60°\right)$ between theAP 2 and the STA 1-1 and $RSSI_{STA1-2}^{AP2}\left(60°\right)$ between theAP 2 and the STA 1-2 at the beam width of 60°. Then, the AP 1 and the AP 2 switch the beam width to 90°, and the AP 1 sends a downlink frame 2 to the STA 1-1 and the STA 1-2. The STA 1-1 and the STA 1-2 reply with an uplink frame 2 for the downlink frame 2. The AP 2 and the AP 2 respectively receive the uplink frame 1 at the beam width of 90°. The AP 1 may obtain $RSSI_{STA1-1}^{AP1}\left(90°\right)$ between the AP 1 and the STA 1-1 and $RSSI_{STA1-2}^{AP1}\left(90°\right)$ between the AP 1 and the STA 1-2 at the beam width of 90°, and the AP 2 may obtain $RSSI_{STA1-1}^{AP2}\left(90°\right)$ between the AP 2 and the STA 1-1 and $RSSI_{STA1-2}^{AP2}\left(90°\right)$ between the AP 2 and the STA 1-2 at the beam width of 90°. The rest can be deduced by analogy until theAP 1 completes measurement of all beam widths. Therefore, the AP 1 obtains channel measurement information between the AP 1 and the STA in the BSS 1, and the AP 2 obtains channel measurement information between the AP 2 and the STA in the BSS 1. After the AP 2 completes measurement of all beam widths, the AP 2 obtains channel measurement information between the AP 2 and the STA in the BSS 2, and the AP 1 obtains channel measurement information between the AP 1 and the STA in the BSS 2.

In the foregoing example, theAP 1 and theAP 2 receive the uplink frame from the STA by using a same beam width. When the AP 1 and the AP 2 exchange the channel measurement information, the channel measurement information may not carry beam width information, so that overheads during exchange can be reduced. Certainly, the AP 1 and the AP 2 may not receive the uplink frame by using the same beam width. For example, theAP 1 may receive the uplink frame 1 at the beam width of 60°, and the AP 2 receives the uplink frame 1 at the beam width of 90°/120°/150°. The AP 1/the AP 2 may sequentially switch the beam widths in ascending order of beam widths, or may sequentially switch the beam widths in descending order of beam widths, or may switch the beam widths in random order, provided that it is ensured that all beam widths of the AP 1 and the AP 2 are used for measurement in a measurement period. This is not limited herein. In addition, the AP switches the beam width to a to-be-measured beam width and then sends the downlink frame to the STA. After sending the downlink frame, theAP does not need to immediately switch the beam width to receive the uplink frame from the STA. This can ensure that the AP receives the uplink frame from the STA at the to-be-measured beam width. Certainly, the beam width used by the AP to send the downlink frame may not be strictly consistent with the beam width used by the AP to receive the uplink frame from the STA. For example, the AP may send the downlink frame at a wide beam width, and immediately switch to the to-be-measured beam width to receive the uplink frame after sending the downlink frame.

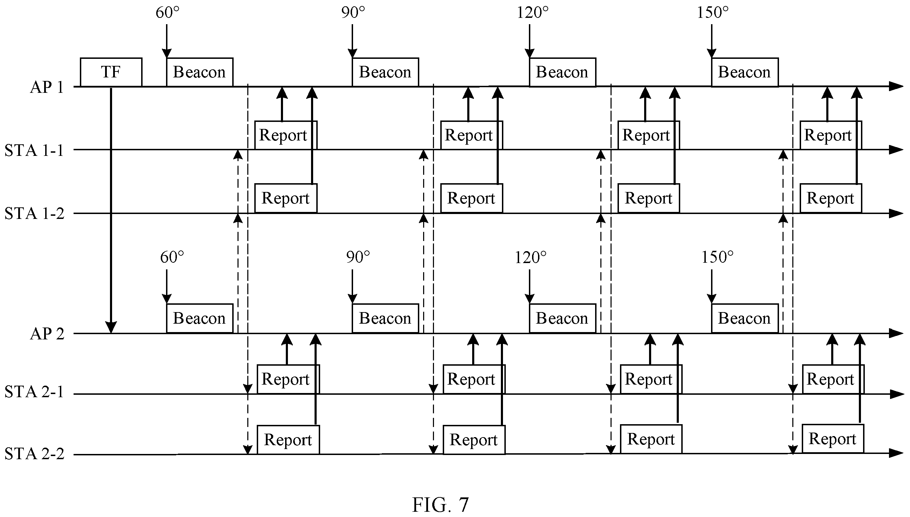

FIG. 7 is a schematic flowchart of another channel measurement method according to this application. FIG. 7 shows that a STA measures channel measurement values between the STA and an associated AP and a non-associated AP at different beam widths based on a downlink frame, and reports a measurement result to the associatedAP. Specifically, the AP 1 sends an indication frame to the AP 2, to notify the AP 2 to prepare to send the downlink frame used for channel measurement. The indication frame may be a trigger frame. After an SIFS, the AP 1 and the AP 2 simultaneously change the beam width in sequence to send the downlink frame. In this case, the downlink frame is a broadcast frame, so that both the associated AP and the non-associated AP can receive the downlink frame. The downlink frame may be a beacon (beacon) frame. The AP 1 and the AP 2 send the downlink frame at a same interval. The STA 1-1, the STA 1-2, the STA 2-1, and the STA 2-2 respectively receive the downlink frames sent by the AP 1 and the AP 2, to obtain channel measurement values between the STA 1-1 and the AP 1, between the STA 1-2 and the AP 1, between the STA 2-1 and theAP 1, and between the STA 2-2 and theAP 1 at different beam widths and channel measurement values between the STA 1-1 and the AP 2, between the STA 1-2 and the AP 2, between the STA 2-1 and the AP 2, and between the STA 2-2 and the AP 2 at different beam widths. After obtaining the channel measurement value, each STA reports (report) the channel measurement value to the associated AP.

The channel measurement value reported by the STAmay be an RSSI value or a PL value. For example, the downlink frame sent by the AP includes the transmit power of the AP, and the STA may parse the downlink frame to obtain the transmit power of the AP, and then obtain, based on the transmit power and a corresponding RSSI value when the downlink frame is received, a path loss of the transmission link between the AP and the STA at a corresponding beam width. A formula is as follows:

$$PL_{AP}^{STA}\left(A_{BW}\right) = TxP_{AP} - RSSI_{AP}^{STA}\left(A_{BW}\right) \quad \text{(Formula 1)}$$

In Formula 1, $TxP_{AP}$ represents a transmit power corresponding to a downlink frame sent by the $AP$, $RSSI_{AP}^{STA}\left(A_{BW}\right)$ represents received signal strength of a downlink frame that is sent by theAP at a beam width $A_{BW}$ and received by the $STA$, and $PL_{AP}^{STA}\left(A_{BW}\right)$ represents a path loss between the $AP$ and the $STA$ at the beam width $A_{BW}$.

For example, the AP 1 and the AP 2 switch the beam width to 60°, the AP 1 sends a beacon frame 1, and the AP 2 sends a beacon frame 2. The STA 1-1, the STA 1-2, the STA 2-1, and the STA 2-2 respectively receive the beacon frame 1 from the AP 1, to obtain RSSI values between the STA 1-1 and the AP 1, between the STA 1-2 and the AP 1, between the STA 2-1 and the AP 1, and between the STA 2-2 and the AP 1 at the beam width of 60°, namely, $RSSI_{AP1}^{STA1-1}\left(60°\right)$, $RSSI_{AP1}^{STA1-2}\left(60°\right)$, $RSSI_{AP1}^{STA2-1}\left(60°\right)$, and $RSSI_{AP1}^{STA2-2}\left(60°\right)$, and respectively receive the beacon frame 2 from the AP 2, to obtain RSSI values between the STA 1-1 and the AP 2, between the STA 1-2 and the AP 2, between the STA 2-1 and the AP 2, and between the STA 2-2 and the AP 2 at the beam width of 60°, namely, $RSSI_{AP2}^{STA1-1}\left(60°\right)$, $RSSI_{AP2}^{STA1-2}\left(60°\right)$, $RSSI_{AP2}^{STA2-1}\left(60°\right)$, and $RSSI_{AP2}^{STA2-2}\left(60°\right)$. Each STA calculates a PL value between the STA and the AP at the beam width of 60° according to Formula 1. The STA 1-1 and the STA 1-2 respectively report obtained PL values between the STA 1-1 and the AP 1 and between the STA 1-2 and the AP 1 at the beam width of 60°, and obtained PL values between the STA 1-1 and the AP 2 and between the STA 1-2 and the AP 2 at the beam width of 60° to the AP 1. The STA 2-1 and the STA 2-2 respectively report obtained PL values between the STA 2-1 and theAP 1 and between the STA 2-2 and theAP 1 at the beam width of 60°, and obtained PL values between the STA 2-1 and the AP 2 and between the STA 2-2 and the AP 2 at the beam width of 60° to the AP 2. Each STA receives beacon frames from a plurality of APs each time, and can obtain a plurality of channel measurement values. These channel measurement values may be separately reported to an associated AP, or may be added to a frame and reported to the associated AP. This is not limited herein.

The AP 1 and the AP 2 switch the beam width to 90°, theAP 1 sends a beacon frame 3, and the AP 2 sends a beacon frame 4. The STA 1-1, the STA 1-2, the STA 2-1, and the STA 2-2 respectively receive the beacon frame 3 from theAP 1, to obtain RSSI values between the STA 1-1 and theAP 1, between the STA 1-2 and theAP 1, between the STA 2-1 and theAP 1, and between the STA 2-2 and theAP 1 at the beam width of 90°, namely, $RSSI_{AP1}^{STA1-1}\left(90°\right)$, $RSSI_{AP1}^{STA1-2}\left(90°\right)$, $RSSI_{AP1}^{STA2-1}\left(90°\right)$, and $RSSI_{AP1}^{STA2-2}\left(90°\right)$, and receive the beacon frame 4 from theAP 2, to obtain RSSI values between the STA 1-1 and the AP 2, between the STA 1-2 and the AP 2, between the STA 2-1 and the AP 2, and between the STA 2-2 and the AP 2 at the beam width of 90°, namely, $RSSI_{AP2}^{STA1-1}\left(90°\right)$, $RSSI_{AP2}^{STA1-2}\left(90°\right)$, $RSSI_{AP2}^{STA2-1}\left(90°\right)$, and $RSSI_{AP2}^{STA2-2}\left(90°\right)$. Each STA calculates a PL value between the STA and the AP at the beam width of 60° according to Formula 1. The STA 1-1 and the STA 1-2 respectively report obtained PL values between the STA 1-1 and the AP 1 and between the STA 1-2 and the AP 1 at the beam width of 90°, and obtained RSSI values between the STA 1-1 and the AP 2 and between the STA 1-2 and the AP 2 at the beam width of 90° to the AP 1. The STA 2-1 and the STA 2-2 respectively report obtained RSSI values between the STA 2-1 and the AP 1 and between the STA 2-2 and the AP 1 at the beam width of 90°, and obtained PL values between the STA 2-1 and the AP 2 and between the STA 2-2 and the AP 2 at the beam width of 90° to the AP 2. The rest can be deduced by analogy until theAP 1 and the AP 2 complete measurement of all beam widths.

In the foregoing example, the channel measurement value reported by each STA to the associated AP is a PL value. In some other implementations, the STA may not calculate the PL value, but directly report the RSSI value to the associated AP. During coordinated transmission, the AP may select a beam width based on the RSSI value reported by the STA, or may schedule the STA based on the RSSI value reported by the STA.

In addition, in the foregoing example, the AP 1 and the AP 2 send, to the STA by using a same beam width, the downlink frame used for measurement. Therefore, when the AP 1 and the AP 2 exchange the channel measurement information, the channel measurement information may not carry beam width information, so that overheads during exchange can be reduced. Certainly, the AP 1 and the AP 2 may not send, by using the same beam width, the downlink frame used for measurement. For example, theAP 1 may send the beacon frame 1 at the beam width of 60°, and theAP 2 sends the beacon frame 2 at the beam width of 90°/120°/150°.

FIG. 6 and FIG. 7 show methods for measuring a channel between an AP and a STA. The following describes a method for measuring a channel betweenAPs. TheAP 1 and theAP 2 may periodically exchange beacon frames. TheAP 1 receives the beacon frame from the AP 2, and the AP 2 receives the beacon frame from the AP 1, so as to obtain the channel measurement value between the AP 1 and the AP 2. Specifically, a measurement manner from the AP 1 to the AP 2 is that the AP 1 separately sends a plurality of beacon frames at different beam widths, and theAP 2 separately receives, at different beam widths, the plurality of beacon frames sent by theAP 1 at each beam width, so as to obtain a channel measurement value between theAP 1 at each beam width and the AP 2 at each beam width. A measurement manner from the AP 2 to the AP 1 is similar, and therefore details are not described herein again.

For example, the AP 1 sends four beacon frames separately at the beam width of 60°, and the AP 2 separately receives the four beacon frames at the beam widths of 60°, 90°, 120°, and 150°, so as to obtain $RSSI_{AP1}^{AP2}\left(60°,60°\right)$, $RSSI_{AP1}^{AP2}\left(60°,90°\right)$, $RSSI_{AP1}^{AP2}\left(60°,120°\right)$, and $RSSI_{AP1}^{AP2}\left(60°,150°\right)$, or $PL_{AP1}^{AP2}\left(60°,60°\right)$, $PL_{AP1}^{AP2}\left(60°,90°\right)$, $PL_{AP1}^{AP2}\left(60°,120°\right)$, and $PL_{AP1}^{AP2}\left(60°,150°\right)$. The AP 1 sends four beacon frames separately at the beam width of 90°, and the AP 2 separately receives the four beacon frames at the beam widths of 60°, 90°, 120°, and 150°, so as to obtain $RSSI_{AP1}^{AP2}\left(90°,60°\right)$, $RSSI_{AP1}^{AP2}\left(90°,90°\right)$, $RSSI_{AP1}^{AP2}\left(90°,120°\right)$, and $RSSI_{AP1}^{AP2}\left(90°,150°\right)$, or $PL_{AP1}^{AP2}\left(90°,60°\right)$, $PL_{AP1}^{AP2}\left(90°,90°\right)$, $PL_{AP1}^{AP2}\left(90°,120°\right)$, and $PL_{AP1}^{AP2}\left(90°,150°\right)$. The rest can be deduced by analogy until the AP 1 and the AP 2 complete measurement of all beam widths.

After measurement, the AP 1 may obtain channel measurement information in the BSS 1 and partial channel measurement information between the BSS 1 and the BSS 2. The AP 2 may obtain channel measurement information in the BSS 2 and partial channel measurement information between the BSS 1 and the BSS 2. The AP 1 and the AP 2 may exchange some or all of the channel measurement information obtained by the AP 1 and theAP 2, so that the channel measurement information mastered by the AP 1 and the AP 2 is more comprehensive, and a more appropriate beam width and a more appropriate STA can be selected based on the channel measurement information during coordinated transmission. For example, after coordinated measurement, the AP 1 may obtain channel measurement information 1 between the AP 1 and a plurality of STAs in the BSS 1 at different beam widths, and channel measurement information 2 between the AP 1 and the AP 2 and a plurality of STAs in the BSS 2 at different beam widths. The AP 2 may obtain channel measurement information 3 between the AP 2 and a plurality of STAs in the BSS 2 at different beam widths, and channel measurement information 4 between the AP 2 and the AP 1 and the plurality of STAs in the BSS 1 at different beam widths. The AP 1 may send the channel measurement information 2 obtained by the AP 1 to the AP 2, and the AP 2 may send the channel measurement information 4 obtained by the AP 2 to the AP 1. Alternatively, the AP 1 may send both the channel measurement information 1 and the channel measurement information 2 obtained by theAP 1 to the AP 2, and the AP 2 may send both the channel measurement information 3 and the channel measurement information 4 obtained by the AP 2 to the AP 1.

TheAP 1 and theAP 2 may further exchange the channel measurement information by using a switch and a controller. Certainly, theAP 1 and theAP 2 may further exchange the channel measurement information by using an air interface.

In the preparation phase, theAP in the WLAN system continuously and periodically performs measurement to obtain the channel measurement information. In the announcement phase, when theAP in the WLAN system preempts a TXOP, a sharing AP that preempts the TXOP can negotiate, with a shared AP based on the channel measurement information, a scheduled STA and a selected beam width, and the sharing AP and the shared AP perform concurrent transmission at beam widths selected by the sharing AP and the shared AP, so that more STAs in a BSS to which the shared AP belongs have an opportunity to participate in coordinated transmission. In addition, the AP can minimize co-channel interference and maximize an antenna gain at an appropriate beam width, thereby improving a system capacity.

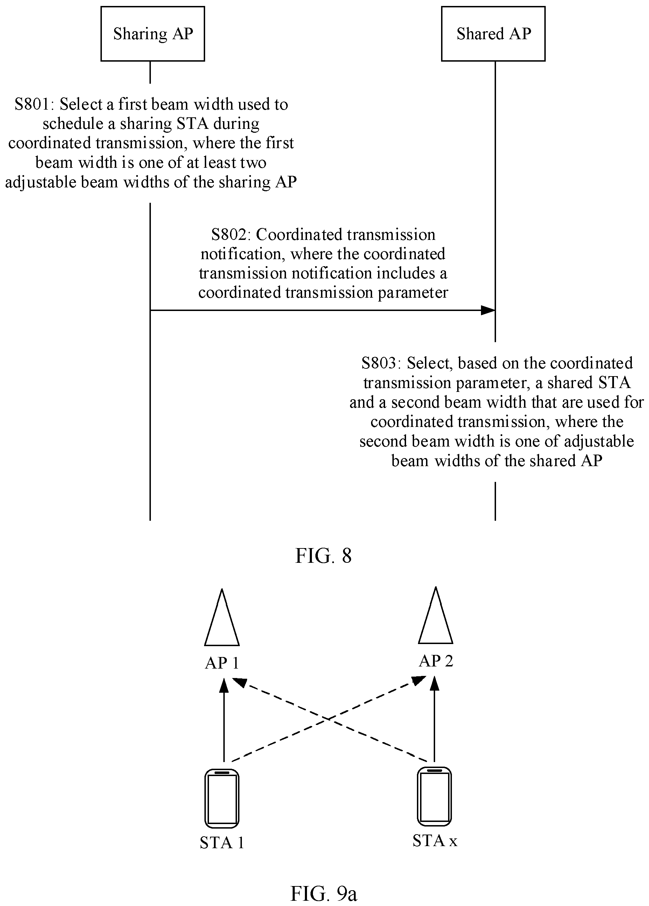

Specifically, FIG. 8 is a schematic flowchart of a communication method according to this application. This embodiment includes the following steps.

S801: A shared AP selects a first beam width used to schedule a sharing STA during coordinated transmission, where the first beam width is one of at least two adjustable beam widths of the sharing AP.

After preempting a TXOP, the sharing AP first determines, according to a resource scheduling algorithm, a sharing STA that participates in coordinated transmission. The sharing AP may schedule, in associated STAs of the sharing AP, a plurality of STAs as the sharing STAs to participate in coordinated transmission, or may schedule, in the associated STAs, one STA as the sharing STA to participate in coordinated transmission. Both the sharing STA and the sharing AP belong to ta first BSS.

The resource scheduling algorithm may be a round robin (round robin, RR) algorithm, a maximum carrier to interference (maximum carrier to interference, Max C/I) algorithm, a proportional fair (proportional fair, PF) algorithm, or the like.

An antenna of the sharing AP has at least two adjustable beam widths. In a preparation phase, the sharing AP already obtains a channel measurement value between the sharing AP and the sharing STA at the at least two beam widths. In an announcement phase, if the sharing STA is a single STA, the sharing AP selects a first beam width from the at least two beam widths of the sharing AP according to a beam width selection rule and the channel measurement information. For example, the beam width selection rule is that the sharing AP determines, from at least two channel measurement values between the sharing AP and the sharing STA, a target channel measurement value indicating best transmission link quality, and a beam width corresponding to the target channel measurement value may be determined as the first beam width used to schedule the sharing STA. When the channel measurement value is an RSSI value or an SINR value, a largest value in at least two RSSI/SINR values between the sharing AP and the sharing STA may be determined as the target channel measurement value. When the channel measurement value is a PL value, a smallest value in at least two PL values between the sharing AP and the sharing STA may be determined as the target channel measurement value.

For example, the channel measurement value is an RSSI value, and the sharing AP includes four beam widths: 60°, 90°, 120°, and 150°. The channel measurement information includes four RSSI values between the sharing AP and the sharing STA, namely, $RSSI(60°)$, $RSSI(90°)$, $RSSI(120')$, and $RSSI(150°)$. If the four RSSI values are sorted in descending order as $RSSI(90°) > RSSI(60°) > RSSI(120°) > RSSI(150°)$, the beam width 90° corresponding to $RSSI(90°)$ may be determined as a beam width for scheduling the sharing STA during coordinated transmission.

If the sharing STAs are a plurality of STAs, the sharing AP needs to schedule these STAs at one beam width, and the sharing AP may select a beam width that can cover these STAs. Specifically, the sharing AP may select an appropriate beam width as the first beam width according to a principle of maximum total throughput when the STAs use each beam width, so as to ensure that the first beam width can cover all scheduled STAs, and further ensure a success rate and a transmission rate of data transmission.

Generally, when a distance between the sharing STA and the sharing AP is long, the sharing AP may select a large beam width to schedule the sharing STA. When the distance between the sharing STA and the sharing AP is short, the sharing AP may select a small beam width to schedule the sharing AP. In this case, compared with the large beam width, in one aspect, coverage of the sharing AP is smaller, overlapping coverage between the sharing AP and the shared AP is also smaller, non-overlapping coverage is larger, and interference caused by the sharingAP to the shared AP and STAs in non-overlapping coverage of the shared AP is smaller, so that more STAs in associated STAs of the shared AP have an opportunity to be scheduled to participate in coordinated transmission. In another aspect, when a beam width of the sharing AP is small, an antenna gain is increased, and signal strength in coverage is enhanced, so that quality of a transmission link between the sharing AP and the sharing STA can be improved. Therefore, a higher-order MCS modulation signal can be used, and a system capacity can be increased.

In this embodiment, each channel measurement value in the channel measurement information used by the AP in the announcement phase may be a measurement value obtained in latest channel measurement, or may be an average value, a median value, or the like of measurement values obtained in latest N times of channel measurement. N is an integer greater than or equal to 2. A channel measurement value obtained based on the average value or the median value of the measurement values obtained in the N times of channel measurement is more stable, and is less affected by an abnormal detection value. Therefore, a beam width selected based on the channel measurement value is more stable and accurate.

S802: The sharing AP sends a coordinated transmission notification to the shared AP, where the coordinated transmission notification includes a coordinated transmission parameter

After determining the sharing STA scheduled this time and the used first beam width, the sharing AP sends, to the sharedAP, the coordinated transmission notification that carries the coordinated transmission parameter. The coordinated parameter is obtained based on the sharing STA and the first beam width. For example, the coordinated transmission notification is a coordinated spatial reuse announcement (coordinated spatial reuse announcement, C-SR-A) frame.

In different cases, coordinated transmission parameters carried in the coordinated transmission notification are different.

For example, if the shared AP selects a candidate shared STA of the shared AP or a candidate second beam width based on the coordinated transmission parameter and the channel measurement information, the coordinated transmission parameter includes at least two of the first beam width selected by the sharing AP, an identifier of the sharing STA, and a first interference limit. The coordinated transmission parameter may further include at least one of TXOP duration, an identifier of the shared AP in this coordinated transmission, a transmission direction of the shared AP, and the like.

For another example, if the sharing AP selects the candidate shared STA and/or the candidate second beam width for the shared AP based on the coordinated transmission parameter and the channel measurement information, the coordinated transmission parameter includes at least one of an identifier of the candidate shared STA and the candidate second beam width. The coordinated transmission parameter may further include at least one of TXOP duration, an identifier of the shared AP in this coordinated transmission, a transmission direction of the shared AP, and the like.

The candidate shared STA is a STA that meets an interference limit condition and that is selected by the sharing AP or the shared AP from all associated STAs of the shared AP based on the first beam width, the identifier of the sharing STA, and the channel measurement information. The candidate second beam width is a beam width that meets the interference limit condition and that is selected by the sharing AP or the shared AP from all adjustable beam widths of the sharedAP based on the sharing STA, the first beam width, and the channel measurement information. There may be one or more candidate shared STAs and candidate second beam widths. The sharing AP and the shared AP already exchange respective channel measurement information in the preparation phase. Therefore, both the sharing AP and the shared AP can select the candidate shared STA and the candidate second beam width for the shared AP. A shared STA is selected from the candidate shared STAs, and a beam width that is used when the shared STA is scheduled is selected from the candidate second beam widths. A manner in which the sharing AP selects the candidate shared STA and the candidate second beam width is the same as a manner in which the shared AP selects the candidate shared STA and the candidate second beam width. For an implementation in which the sharing AP selects the candidate shared STA and the candidate second beam width, refer to the related descriptions that the shared AP selects the candidate shared STA and the candidate second beam width below.

The first interference limit is a tolerable interference limit (tolerable interference limit, TIL) on a transmission link (which is referred to as a first link for short below) between the sharing AP and the sharing STA at the first beam width. When interference to the first link is less than the first interference limit, a probability that a signal receiver in the first link successfully demodulates a signal is high. When the interference to the first link is greater than or equal to the first interference limit, a bit error rate may be high when the signal receiver in the first link demodulates a signal. The first interference limit may be a preset empirical value, or may be obtained through calculation based on the first beam width, the sharing STA, and the channel measurement information. A calculation manner of the first interference limit is related to a transmission direction, and is described below with reference to a specific scenario.

S803: The sharedAP selects, based on the coordinated transmission parameter, the shared STA and the second beam width that are used for coordinated transmission, where the second beam width is one of adjustable beam widths of the shared AP.

In this embodiment, the shared AP may be an AP with an adjustable beam width, and an antenna of the shared AP has at least two adjustable beam widths. After receiving the coordinated transmission notification of the sharing AP, the shared AP selects, based on the coordinated transmission parameter in the coordinated transmission notification, an appropriate STA from associated STAs of the shared AP as the shared STA to participate in coordinated transmission, and selects, from a plurality of adjustable beam widths of the sharedAP, an appropriate beam width as the second beam width for scheduling the sharedAP during coordinated transmission, so as to reduce interference between concurrent transmission links during coordinated transmission.

If the candidate shared STA of the shared AP and the candidate second beam width are selected by the sharing AP, and are transmitted to the shared AP by using the coordinated transmission notification, the shared AP obtains the coordinated transmission parameter like the candidate shared STA or the candidate second beam width from the coordinated transmission notification. The shared AP selects one or more STAs from the candidate shared STAs as the shared AP according to the resource scheduling algorithm, and selects, by using the foregoing beam width selection rule, a beam width from the candidate second beam widths corresponding to the shared AP as the second beam width for scheduling the shared AP during coordinated transmission.

If the candidate shared STA of the shared AP and the candidate second beam width are selected by the sharing AP, the sharedAP obtains the coordinated transmission parameter like the first beam width, the identifier of the shared STA, or the first interference limit from the coordinated transmission notification. The shared AP selects, based on the coordinated transmission parameter and the channel measurement information, at least one STA that meets the interference limit condition from all associated STAs of the shared AP as the candidate shared STA. The shared AP selects, based on the coordinated transmission parameter and the channel measurement information, at least one beam width that meets the interference limit condition from all adjustable beam widths of the shared AP as the candidate second beam width. Then, the shared AP selects one or more STAs from the candidate shared STAs as the shared AP according to the resource scheduling algorithm, and selects, by using the foregoing beam width selection rule, a beam width from the candidate second beam widths corresponding to the shared AP as the second beam width for scheduling the shared AP during coordinated transmission.

There are a plurality of possible transmission links between the shared AP and the associated STA of the sharedAP, including a transmission link (which is referred to as a second link for short below) formed between the shared AP and each associated STA at each beam width. The shared AP determines whether each second link meets the interference limit condition, to select, from all second links, a second link that meets the interference limit condition. A beam width corresponding to the second link that meets the interference limit condition is the candidate second beam width, a corresponding STA is the candidate shared STA, and there is an association relationship between the candidate shared STA and the candidate second beam width. That is, when a candidate shared STA is selected as the shared STA, a second beam width needs to be selected from the candidate second beam widths that are in an association relationship with the candidate shared STA. In this way, the shared STA is selected from the candidate shared STAs, and the second beam width is selected from the candidate second beam widths associated with the shared STA, so as to ensure that a transmission link between the shared AP and the shared STA at the second beam width meets the interference limit condition.

To ensure that the first link can successfully receive and decode a signal during coordinated transmission, the shared AP may determine whether first interference caused by each second link to the first link is less than the first interference limit of the first link. The second link with the first interference to the first link less than the first interference limit may be considered as the second link that meets the interference limit condition. If the sharing STA and the first beam width used by the sharing AP to schedule the sharing STA are determined, the first interference limit tolerable by the first link is determined. The first interference limit may be calculated by the sharing AP and sent to the shared AP by using the coordinated transmission notification, or may be obtained by sending, by the sharing AP to the shared AP by using the coordinated transmission notification, the first beam width and the identifier of the scheduled sharing AP that are selected by the sharing AP, or may be obtained by the shared AP through calculation based on the first beam width, the identifier of the shared AP, and the channel measurement information.

To further reduce co-channel interference between concurrent transmission links, in this embodiment, interference caused by the first link to the second link may be further considered, so as to ensure transmission efficiency and a success rate of the second link used for coordinated transmission. Specifically, the shared AP determines whether the first interference caused by each second link to the first link is less than the first interference limit of the first link, and determines whether a second interference limit of each second link is greater than second interference caused by the first link to the second link. A second link with the first interference to the first link less than the first interference limit and the second interference limit greater than the second interference may be considered as the second link that meets the interference limit condition. The second interference limit may be a preset empirical value, or may be obtained through calculation based on a beam width corresponding to the second link, the STA, and the channel measurement information. A calculation manner of the second interference limit is related to a transmission direction, and is described below with reference to a specific scenario.

The first interference caused by the second link to the first link is specifically interference caused by a signal sent by a signal sender on the second link to a signal receiver on the first link. The second interference caused by the first link to the second link is specifically interference caused by a signal sent by a signal sender on the first link to a signal receiver on the second link. Whether the signal sender or receiver is an AP or a STA is related to the transmission direction. Based on transmission directions of the first link and the second link, this embodiment may provide three scenarios. To be specific, the transmission directions of the first link and the second link are both uplink directions, the transmission directions of the first link and the second link are both downlink directions, and the transmission direction of the first link is an uplink direction and the transmission direction of the second link is a downlink direction. Methods for obtaining the candidate shared STA and the candidate second beam width and required coordinated transmission parameters vary in different scenarios. When sending the coordinated transmission notification, the sharing AP may select, based on the uplink and downlink directions of the first link and the second link, a corresponding coordinated transmission parameter to be carried in the coordinated transmission notification.

FIG. 9a to FIG. 9c show several scenarios in which transmission directions of a first link and a second link are different. Two APs for coordinated transmission are represented by an AP 1 and an AP 2, the AP 1 is associated with a STA 1, and theAP2 is associated with a STA x. The STA x is any associated STA of the AP 2. A link between the AP 1 and the STA 1 is denoted as the first link, and a link between the AP 2 and the STA x is denoted as the second link. Herein, for example, the AP 1 is a sharing AP, the STA 1 is a sharing STA, and the AP 2 is a shared AP. A solid arrow indicates a link direction. A dotted arrow indicates an interference source. In FIG. 8, an example in which the AP 1 and the AP 2 schedule a single STA to participate in coordinated transmission is used.

In FIG. 9a, the transmission direction of the first link is an uplink direction, and the transmission direction of the second link is an uplink direction. When theAP 1 receives an uplink signal sent by the STA 1, the STA x sends an uplink signal to theAP 2. In this case, theAP 1 may be interfered by the STA x. Interference caused by the STA x to theAP 1 at the first beam width is the first interference. A calculation manner of the first interference is subtracting a path loss from the STA x to the AP 1 at the first beam width from a transmit power of the STA x. The first interference should be less than the first interference limit. Formulas are expressed as follows:

$$TxP_{STAx} - PL_{STAx}^{AP1}(A_{BW1}) < TIL1 \text{ (Formula 2)}$$

$$TIL1 = TxP_{STA1} - PL_{STA1}^{AP1}(A_{BW1}) - minSINR(PER < 10\%) - SM \text{ (Formula 3)}$$

In Formula 2, $A_{BW1}$ is the first beam width. *TIL1* is the first interference limit, $TxP_{STAx}$ is the transmit power of the STA x, and $PL_{STAx}^{AP1}(A_{BW1})$ is the path loss from the STA x to the AP 1 at the first beam width, which may be obtained from the channel measurement information. In Formula 3, $TxP_{STA1}$ is a transmit power of the STA 1, $PL_{STA1}^{AP1}(A_{BW1})$ is a path loss from the STA 1 to the AP 1 at the first beam width, which may be obtained from the channel measurement information, and *minSINR(PER < 10%)* is a minimum signal to interference noise ratio required for theAP 1 to receive a signal and successfully demodulate the signal, that is, an SINR value that makes a bit error rate not exceed 10%, and is a known parameter. An SM (safety margin) is a safety margin, which is usually 0 to 5 dB (dB).

A transmit power of the STA may be obtained by the AP through capability negotiation when the STA is accessed, or may be an empirical value. Certainly, the AP may not obtain the transmit power of the STA. If the channel measurement value is an RSSI value obtained by using the measurement method 1, $TxP_{STAx} - PL_{STAx}^{AP1}(A_{BW1}) = TxP_{STAx} - \left(TxP_{STAx} - RSSI_{STAx}^{AP1}(A_{BW1})\right) = RSSI_{STAx}^{AP1}(A_{BW1})$, and $TxP_{STA1} - PL_{STA1}^{AP1}(A_{BW1}) = TxP_{STA1} - \left(TxP_{STA1} - RSSI_{STA1}^{AP1}(A_{BW1})\right) = RSSI_{STA1}^{AP1}(A_{BW1})$. Herein, it is assumed that the transmit power of the STA remains unchanged, that is, the transmit power of the STA is not adjusted. In this case, Formula 2 may be simplified as follows:

$$RSSI_{STAx}^{AP1}(A_{BW1}) < RSSI_{STA1}^{AP1}(A_{BW1}) - minSINR(PER < 10\%) - SM \text{ (Formula 4)}$$

$RSSI_{STAx}^{AP1}(A_{BW1})$ is received signal strength of the uplink signal received by the AP 1 from the STA x at the first beam width, and $RSSI_{STA1}^{AP1}(A_{BW1})$ is received signal strength of the uplink signal received by the AP 1 from the STA 1 at the first beam width. Both $RSSI_{STAx}^{AP1}(A_{BW1})$ and $RSSI_{STA1}^{AP1}(A_{BW1})$ are channel measurement values, and may be directly obtained from the channel measurement information.

In Formula 2 to Formula 4, a unique variable is the STA x. The channel measurement information includes channel measurement values between the STA 1 and the STA x at the first beam width. These channel measurement values are substituted into Formula 2 or Formula 4, so that a channel measurement value of the second link that satisfies Formula 2 or Formula 4 can be selected. If only the interference caused by the second link to the first link is considered, the STA x corresponding to the channel measurement value that satisfies Formula 2 or Formula 4 may be determined as the candidate shared STA. In this case, all adjustable beam widths of the AP 2 are the candidate second beam widths.

During coordinated transmission, the first link may also cause interference to the second link. For example, when the AP 2 receives an uplink signal sent by the STA x, the STA 1 sends an uplink signal to the AP 1. In this case, the AP 2 may be interfered by the STA 1. Interference caused by the STA 1 at the beam width $A_{BWy}$ to the AP 2 is the second interference. A calculation manner of the second interference is subtracting a path loss from the STA 1 to the AP 2 at the beam width $A_{BWy}$ from the transmit power of the STA 1. If the interference caused by the first link to the second link is further considered, in addition to Formula 2 or Formula 4, that the second interference limit of the second link is greater than the second interference caused by the first link to the second link should be met. Formulas are as follows:

$$TxP_{STA1} - PL_{STA1}^{AP2}(A_{BWy}) < TIL2 \text{ (Formula 5)}$$

$$TIL2 = TxP_{STAx} - PL_{STAx}^{AP2}(A_{BWy}) - minSINR(PER < 10\%) - SM \quad \text{(Formula 6)}$$

In Formula 5, $A_{BWy}$ is any beam width in the adjustable beam widths of the AP 2. *TIL2* is the second interference limit, $TxP_{STA1}$ is the transmit power of the STA 1, and $PL_{STA1}^{AP2}(A_{BWy})$ is the path loss from the STA 1 to the AP 2 at the beam width $A_{BWy}$, which may be obtained from the channel measurement information. In Formula 6, $TxP_{STAx}$ is the transmit power of the STAx, and $PL_{STAx}^{AP2}(A_{BWy})$ is a path loss from the STA x to theAP 2 at the beam width $A_{BWy}$, which may be obtained from the channel measurement information. Meanings of *minSINR(PER* < 10%) and SM are the same as those in Formula 3. Similarly, if the channel measurement value is the RSSI value obtained by using the measurement method 1, Formula 5 may be simplified as follows:

$$RSSI_{STA1}^{AP2}(A_{BWy}) < RSSI_{STAx}^{AP2}(A_{BWy}) - minSINR(PER < 10\%) - SM \quad \text{(Formula 7)}$$

$RSSI_{STA1}^{AP2}(A_{BWy})$ is received signal strength of the uplink signal received by the AP 2 from the STA 1 at the first beam width, and $RSSI_{STAx}^{AP2}(A_{BWy})$ is received signal strength of the uplink signal received by theAP 2 from the STA x at the first beam width. Both $RSSI_{STA1}^{AP2}(A_{BWy})$ and $RSSI_{STAx}^{AP2}(A_{BWy})$ are channel measurement values, and may be directly obtained from the channel measurement information.

In Formula 2 to Formula 7, variables are the STA x and $A_{BWy}$, and the STA x and $A_{BWy}$ may be obtained through solving with reference to the channel measurement information. The channel measurement information includes a channel measurement value between the AP 2 and the STA 1 at each beam width and a channel measurement value between the AP 2 and the STA x at each beam width. These channel measurement values are substituted into Formula 5 (or Formula 7) and Formula 6, so that a second link that satisfies Formula 5 or Formula 7 can be selected from all second links. If the STA x corresponding to the second link that satisfies Formula 5 or Formula 7 also satisfies Formula 2 and Formula 4, the second link is a second link that meets the interference limit condition. A STA corresponding to the second link that meets the interference limit condition is the candidate shared STA, and a corresponding beam width is the candidate second beam width.

The candidate shared STA and the candidate second beam width in the scenario in which the transmission directions of the first link and the second link are both uplink directions may be obtained according to the foregoing formula. Therefore, the shared STA and the second beam width that are selected based on the candidate shared STA and the candidate second beam width can control mutual interference between concurrent transmission links. The beam width of the AP is adjusted, and the transmit power of the STA does not need to be adjusted, so that interference between concurrent transmission links can be accurately controlled, and a throughput of coordinated transmission can be improved.

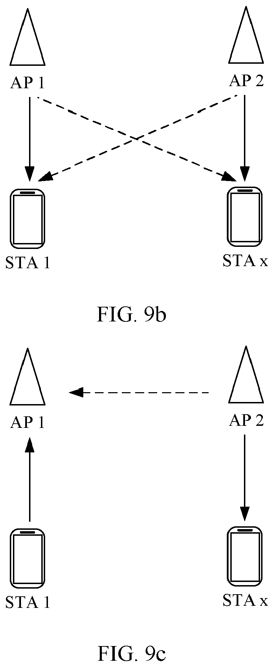

In FIG. 9b, the transmission direction of the first link is a downlink direction, and the transmission direction of the second link is a downlink direction. When the STA 1 receives a downlink signal sent by theAP 1, theAP 2 sends a downlink signal to the STA 2 at the beam width $A_{BWy}$. In this case, the STA 1 may be interfered by theAP 2 at the beam width $A_{BWy}$. A calculation manner of the first interference is subtracting a path loss from theAP 2 at the beam width $A_{BWy}$ to the STA 1 from the transmit power of the AP 2 at the beam width $A_{BWy}$. The first interference should be less than the first interference limit. Formulas are expressed as follows:

$$TxP_{AP2} - PL_{AP2}^{STA1}(A_{BWy}) < TIL1 \text{ (Formula 8)}$$

$$TIL1 = TxP_{AP1} - PL_{AP1}^{STA1}(A_{BW1}) - minSINR(PER < 10\%) - SM \quad \text{(Formula 9)}$$

In Formula 8, $A_{BWy}$ is any beam width in the adjustable beam widths of the AP 2. *TIL1* is the first interference limit, $TxP_{AP2}$ is the transmit power of the AP 2, and $PL_{AP2}^{STA1}(A_{BWy})$ is a path loss from the AP 2 at the beam width $A_{BWy}$ to the STA 1, which may be obtained from the channel measurement information. In Formula 9, $TxP_{AP1}$ is the transmit power of the AP 1, and $PL_{AP1}^{STA1}(A_{BW1})$ is a path loss from the AP 1 at the first beam width to the STA 1, which may be obtained from the channel measurement information. Meanings of other symbols are the same as those in Formula 3.

The transmit power of the AP may be determined, and therefore, in Formula 8, a unique variable is $A_{BWy}$. The channel measurement information includes channel measurement values between the AP 2 and the STA 1 at the first beam width. These channel measurement values are substituted into Formula 8, so that a channel measurement value that satisfies Formula 8 can be selected. If only the interference caused by the second link to the first link is considered, $A_{BWy}$ corresponding to the channel measurement value that satisfies Formula 8 may be determined as the candidate second beam width. In this case, all associated STAs of the AP 2 may be the candidate shared STAs. Certainly, to ensure quality of a transmission link between the sharedAP and the shared STA, a candidate shared STA corresponding to each candidate second beam width may be selected based on the candidate second beam width and the channel measurement information. For example, when the channel measurement value is an RSSI value, a STA whose RSSI value between the STA and the AP 2 at the candidate second beam width is greater than a threshold may be selected as the candidate shared STA. When the channel measurement value is a PL value, a STA whose PL value between the STA and the AP 2 at the candidate second beam width is less than a threshold may be selected as the candidate shared STA.

During coordinated transmission, the first link may also cause interference to the second link. For example, when the STA 2 receives a downlink signal sent by the AP 2, the AP 1 sends a downlink signal to the STA 1. In this case, the STA 2 may be interfered by the AP 1. Interference caused by the AP 1 at the first beam width to the STA 2 is the second interference. A calculation manner of the second interference is subtracting a path loss from the AP 1 at the first beam width to the STA 2 from the transmit power of the AP 1. If the interference caused by the first link to the second link is further considered, in addition to Formula 2 or Formula 4, that the second interference limit of the second link is greater than the second interference caused by the first link to the second link should be met. Formulas are as follows:

$$TxP_{AP1} - PL_{AP1}^{STA2}(A_{BW1}) < TIL2 \text{ (Formula 10)}$$

$$TIL2 = TxP_{AP2} - PL_{AP2}^{STAx}(A_{BWy}) - minSINR(PER < 10\%) - SM \quad \text{(Formula 11)}$$

In Formula 10, $A_{BW1}$ is the first beam width. *TIL2* is the second interference limit, $TxP_{AP1}$ is the transmit power of the AP 1, and $PL_{AP1}^{STA2}(A_{BW1})$ is the path loss from the AP 1 at the first beam width to the STA 2, which may be obtained from the channel measurement information. In Formula 11, $TxP_{AP2}$ is the transmit power of the AP 2, and $PL_{AP2}^{STAx}(A_{BWy})$ is a path loss from the AP 2 at the beam width $A_{BWy}$ to the STA x, which may be obtained from the channel measurement information. Meanings of *minSINR(PER < 10%)* and SM are the same as those in Formula 3.

In Formula 8 to Formula 11, variables are the STA x and $A_{BWy}$, and the STA x and $A_{BWy}$ may be obtained through solving with reference to the channel measurement information. The channel measurement information includes a channel measurement value between the AP 1 and each associated STA of the AP 2 at the first beam width and a channel measurement value between the AP 2 and the STA x at each beam width. These channel measurement values are substituted into Formula 8 to Formula 11, so that a second link that satisfies Formula 10 can be selected from all second links. If the beam width corresponding to the second link that satisfies Formula 10 also satisfies Formula 8, the second link is a second link that meets the interference limit condition. A beam width corresponding to the second link that meets the interference limit condition is the candidate second beam width, and a corresponding STA is the candidate shared STA.

The candidate shared STA and the candidate second beam width in the scenario in which the transmission directions of the first link and the second link are both downlink directions may be obtained according to the foregoing formula. Therefore, the shared STA and the second beam width that are selected based on the candidate shared STA and the candidate second beam width can control mutual interference between concurrent transmission links. The beam width of the AP is adjusted, and even if the transmit power of the AP is not adjusted, interference between concurrent transmission links can be accurately controlled, even an antenna gain can be increased, and a throughput of coordinated transmission can be improved.

In FIG. 9c, the transmission direction of the first link is an uplink direction, and the transmission direction of the second link is a downlink direction. When the AP 1 receives, at the first beam width, an uplink signal sent by the STA 1, the AP 2 sends a downlink signal to the STA 2 at the beam width $A_{BWy}$, and the AP 1 may be interfered by the AP 2. A calculation manner of the first interference is subtracting a path loss from the AP 2 at the beam width $A_{BWy}$ to the STA 1 from the transmit power of the AP 2 at the beam width $A_{BWy}$. The first interference should be less than the first interference limit. Formulas are expressed as follows:

$$TxP_{AP2} - PL_{AP2}^{AP1}(A_{BWy}, A_{BW1}) < TIL1 \text{ (Formula 12)}$$

$$TIL1 = TxP_{STA1} - PL_{STA1}^{AP1}(A_{BW1}) - minSINR(PER < 10\%) - SM \text{ (Formula 13)}$$

In Formula 12, $A_{BW1}$ is the first beam width, and $A_{BWy}$ is any beam width in the adjustable beam widths of the AP 2. $TIL1$ is the first interference limit, $TxP_{AP2}$ is the transmit power of the AP 2, and $PL_{AP2}^{AP1}(A_{BWy}, A_{BW1})$ is a path loss from the AP 2 at the beam width $A_{BWy}$ to the AP 1 at the first beam width, which may be obtained from the channel measurement information. In Formula 13, $TxP_{AP2}$ is the transmit power of theAP 2. Meanings of other symbols are the same as those in Formula 3.

In Formula 12, variables are $A_{BWy}$ and $TxP_{AP2}$. The channel measurement information includes a channel measurement value between the AP 2 at the first beam width and the AP 2 at each beam width. These channel measurement values are substituted into Formula 12, so that a maximum transmit power of the AP 2 at the beam width $A_{BWy}$ can be obtained. If the maximum transmit power of the AP 2 at the beam width $A_{BWy}$ is greater than a lower limit of the transmit power of the AP 2, the beam width $A_{BWy}$ is the candidate second beam width.

When the transmission direction of the first link is an uplink direction and the transmission direction of the second link is a downlink direction, because interference between STAs cannot be measured, only the interference caused by the second link to the first link may be considered. In this case, all associated STAs of the AP 2 may be the candidate shared STAs. Certainly, to ensure quality of a transmission link between the shared AP and the shared STA, a candidate shared STA corresponding to each candidate second beam width may be selected based on the candidate second beam width and the channel measurement information. For example, when the channel measurement value is an RSSI value, a STA whose RSSI value between the STA and the AP 2 at the candidate second beam width is greater than a threshold may be selected as the candidate shared STA. When the channel measurement value is a PL value, a STA whose PL value between the STA and the AP 2 at the candidate second beam width is less than a threshold may be selected as the candidate shared STA.

The foregoing describes a method for selecting the shared STA and the second beam width by using an example in which the shared AP is an AP with an adjustable beam width. Certainly, the shared AP may not be an AP with an adjustable beam width. In this case, the second beam width is a beam width already configured for the shared AP.

In the announcement phase, the sharing AP determines the sharing STA and the first beam width that are used for coordinated transmission, and the shared AP determines the shared STA and the second beam width that are used for coordinated transmission. In the data transmission phase, the sharing AP schedules, at the first beam width, the sharing STA to transmit data, and the shared AP schedules, at the second beam width, the shared STA to transmit data.

In addition to scheduling a plurality of STAs by using OFDMA, the plurality of STAs may be invoked in a time division multiplexing manner in a same TXOP. The TXOP is divided into a plurality of time slices. The AP schedules, in each time slice, one STA to participate in coordinated transmission, and the STAs are independently scheduled in different time slices.

In this embodiment, the AP measures channel measurement information between the AP and an associated STA, a non-associated STA, or a co-channel AP at different beam widths. During coordinated transmission, the sharing AP selects, by using the channel measurement information, an appropriate beam width from a plurality of adjustable beam widths of the sharing AP to schedule the sharing STA, so that interference to a BSS in which the shared AP is located can be minimized, and an antenna gain of the sharing AP can be maximized. When the interference to the BSS in which the shared AP is located is reduced, more STAs in the BSS in which the shared AP is located can have an opportunity to participate in coordinated transmission. In addition, when the antenna gain is increased and the interference between the concurrent transmission links is reduced, the concurrent transmission links can transmit data at a higher rate, thereby improving a system capacity.

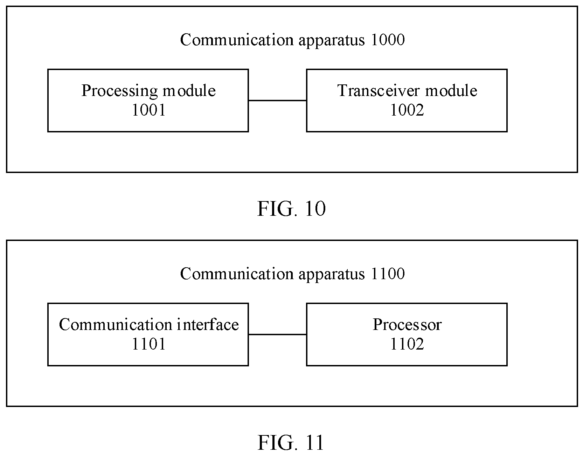

As shown in FIG. 10, based on a same technical concept, this application further provides a communication apparatus 1000. The communication apparatus 1000 may be any AP (a firstAP) with an adjustable beam width in a WLAN system. In a design, the communication apparatus may include a processing module 1001 and a transceiver module 1002. The processing module 1001 is configured to invoke the transceiver module 1002 to perform a receiving function and/or a sending function.

The transceiver module 1002 is configured to separately receive an uplink signal from an associated STA of a first AP, an uplink signal from an associated STA of a secondAP, and a signal from the second AP at at least two beam widths, to obtain first channel measurement information. The second AP is a co-channelAP of the firstAP in the WLAN system.

In a possible implementation, the uplink signal includes an acknowledgment frame.

In a possible implementation, the transceiver module 1002 is configured to receive second channel measurement information from the secondAP. The second channel measurement information includes a channel measurement value between the secondAP and the firstAP and/or the associated STA of the first AP separately at the at least two beam widths.

In a coordinated transmission scenario, the communication apparatus 1000 may be a sharing AP or a shared AP, or may be an apparatus in the sharing AP or the shared AP, or may be an apparatus that can be used in cooperation with the sharing AP or the shared AP. In a design, the communication apparatus 1000 may include a module that is in a one-to-one correspondence with the methods/operations/steps/actions performed by the sharing AP or the shared AP in the foregoing method embodiments. The module may be implemented by a hardware circuit, software, or a combination of a hardware circuit and software.

When the communication apparatus 1000 is configured to perform the method performed by the sharing AP, the processing module 1001 is configured to select a first beam width used to schedule a sharing STA during coordinated transmission, where the first beam width is one of at least two adjustable beam widths of an antenna of the sharing AP.

The transceiver module 1002 is configured to send a coordinated transmission notification to the shared AP. The coordinated transmission notification includes a coordinated transmission parameter, the coordinated transmission parameter is obtained based on the sharing STA and the first beam width, the coordinated transmission notification indicates the shared AP to select, based on the coordinated transmission parameter, a shared STA and a second beam width that are used for coordinated transmission, and the second beam width is one of adjustable beam widths of an antenna of the shared AP.

In a possible implementation, the coordinated transmission parameter includes at least two of the first beam width, an identifier of the sharing STA, and a first interference limit, so that the shared AP selects the shared STA and the second beam width based on the coordinated transmission parameter and channel measurement information. The first interference limit indicates maximum tolerable interference to a transmission link between the sharing AP and the sharing STA at the first beam width, and the channel measurement information is obtained by the sharing AP and/or the shared AP through measurement at different beam widths.

In a possible implementation, the coordinated transmission parameter includes an identifier of a candidate shared STA and/or a candidate second beam width, the candidate shared STA and/or the candidate second beam width are/is selected based on the first beam width, the sharing STA, and channel measurement information, the candidate shared STA includes at least one STA in associated STAs of the sharedAP, the candidate second beam width includes at least one beam width in all adjustable beam widths of the shared AP, the candidate shared STA and/or the candidate second beam width meets an interference limit condition, and the channel measurement information is obtained by the sharing AP and/or the shared AP through measurement at different beam widths.

In a possible implementation, that the interference limit condition is met includes: First interference caused by a second link to a first link is less than the first interference limit of the first link. The first link is the transmission link between the sharing AP and the sharing STA at the first beam width, the second link is a transmission link between the shared AP and the candidate shared STA at the candidate second beam width, and the first interference is obtained based on the channel measurement information.

In a possible implementation, that the interference limit condition is met further includes: A second interference limit of the second link is greater than second interference caused by the first link to the second link. The second interference is obtained based on the channel measurement information.

In a possible implementation, the antenna has different coverage on a horizontal plane at different beam widths.

In a possible implementation, the transceiver module 1002 is configured to separately receive a signal from an associated STA of the sharing AP, a signal from the associated STA of the shared AP, and/or a signal from the shared AP at the at least two beam widths, to obtain the channel measurement information.

In an embodiment, when the communication apparatus 1000 is configured to perform the method performed by the shared AP,

The transceiver module 1002 is configured to receive a coordinated transmission notification from the second AP. The coordinated transmission notification carries a coordinated transmission parameter, the coordinated transmission parameter is obtained based on a first STA and a first beam width, the first STA is a STA that is selected by the second AP from the associated STAs of the second AP and that is used for coordinated transmission, and the first beam width is a first beam width that is selected by the second AP from at least two adjustable beam widths of the second AP and that is used for coordinated transmission.

The processing module 1001 is configured to: select, based on the coordinated transmission parameter and the channel measurement information, a second beam width used for coordinated transmission from at least two adjustable beam widths of the first AP, and select a second STA used for coordinated transmission from the associated STAs. The channel measurement information includes the first channel measurement information and the second channel measurement information, and the second channel measurement information includes a channel measurement value between the second AP and the first AP and/or the associated STA of the first AP separately at the at least two beam widths.

In a possible implementation, the coordinated transmission parameter includes at least two of the first beam width, an identifier of the first STA, and a first interference limit. The first interference limit indicates maximum tolerable interference to a transmission link between the second AP and the first STA at the first beam width.

In a possible implementation, the coordinated transmission parameter includes an identifier of a candidate first STA and/or a candidate second beam width, the candidate first STA and/or the candidate second beam width are/is selected based on the first beam width, the second STA, and channel measurement information, the candidate first STA includes at least one STA in associated STAs of the first AP, and the candidate second beam width includes at least one beam width in all adjustable beam widths of the first AP, the candidate first STA and/or the candidate second beam width meets an interference limiting condition, and the channel measurement information is obtained by the second AP and the first AP through measurement at different beam widths.

In a possible implementation, interference caused by the transmission link between the sharing AP and the sharing STA at the first beam width to a transmission link between the shared AP and the shared STA at the second beam width is less than a second interference limit of the transmission link between the shared AP and the shared STA at the second beam width. The second interference limit is obtained based on the channel measurement information.

FIG. 11 shows a communication apparatus 1100 according to an embodiment of this application. The communication apparatus 1100 is configured to implement functions of the sharing AP or the shared AP in the foregoing method. When the function of the sharing AP is implemented, the communication apparatus may be a sharing AP, or may be an apparatus in the sharing AP, or may be an apparatus that can be used in cooperation with the sharing AP. When the function of the shared AP is implemented, the apparatus may be a shared AP, or may be an apparatus in the shared AP, or may be an apparatus that can be used in cooperation with the sharedAP. The communication apparatus may be a chip system. In this embodiment of this application, the chip system may include a chip, or may include a chip and another discrete component. The communication apparatus 1100 includes at least one processor 1102. The processor 1102 is configured to implement functions of the sharing AP or the shared AP in the method provided in embodiments of this application. The communication apparatus 1100 may further include a communication interface 1101. In this embodiment of this application, the communication interface 1101 may be a transceiver, a circuit, a bus, a module, or a communication interface of another type, and is configured to communicate with another device by using a transmission medium. For example, the communication interface 1101 is used by a component in the apparatus 1100 to communicate with the another device. For example, when the communication apparatus 1100 is a sharing AP, the another device may be a shared AP. When the communication apparatus 1100 is a shared AP, the another apparatus may be a sharing AP. The processor 1102 receives and sends a frame through the communication interface 1101, and is configured to implement the methods in the foregoing method embodiments.

This application further provides a computer-readable storage medium. The computer-readable storage medium stores a computer program. When the computer program is executed by a computer, the method in the foregoing method embodiments is implemented.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in embodiments.

In addition, function units in embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, all of the technical solutions of this application or the part of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

**Claims**

1. A communication method, wherein the method comprises:

   selecting, by a sharing access point, AP, a first beam width used to schedule a sharing station, STA, during coordinated transmission, wherein the first beam width is one of at least two adjustable beam widths of the sharing AP; and

   sending, by the sharing AP, a coordinated transmission notification to a shared AP, wherein the coordinated transmission notification comprises a coordinated transmission parameter, the coordinated transmission parameter is obtained based on the sharing STA and the first beam width, the coordinated transmission notification indicates the shared AP to select, based on the coordinated transmission parameter, a shared STA and a second beam width that are used for coordinated transmission, and the second beam width is one of adjustable beam widths of the shared AP.

2. The method according to claim 1, wherein the coordinated transmission parameter comprises at least two of the first beam width, an identifier of the sharing STA, and a first interference limit, and the first interference limit indicates maximum tolerable interference to a transmission link between the sharing AP and the sharing STA at the first beam width.

3. The method according to claim 1 or 2, wherein the coordinated transmission parameter comprises an identifier of at least one candidate shared STA and/or at least one candidate second beam width, each candidate shared STA and/or each candidate second beam width are/is selected based on the first beam width, the sharing STA, and channel measurement information, each candidate shared STA is a STA in associated STAs of the shared AP, each candidate second beam width is a beam width in all adjustable beam widths of the shared AP, each candidate shared STA and/or each candidate second beam width meet/meets an interference limit condition, and the channel measurement information is obtained by the sharing AP and the shared AP through measurement at different beam widths.

4. The method according to claim 3, wherein that the interference limit condition is met comprises:
   first interference caused by a second link to a first link is less than the first interference limit of the first link, wherein the first link is the transmission link between the sharing AP and the sharing STA at the first beam width, the second link is a transmission link between the sharedAP and the candidate shared STA at the candidate second beam width, and the first interference is obtained based on the channel measurement information.

5. The method according to claim 4, wherein that the interference limit condition is met further comprises:
   a second interference limit of the second link is greater than second interference caused by the first link to the second link, wherein the second interference is obtained based on the channel measurement information.

6. The method according to any one of claims 1 to 5, wherein the sharing AP has different coverage formed on a horizontal plane at different beam widths.

**7.** The method according to any one of claims 1 to 6, wherein the method further comprises:
separately receiving, by the sharing AP, a signal from an associated STA of the sharing AP, a signal from the associated STA of the shared AP, and/or a signal from the shared AP at the at least two beam widths, to obtain the channel measurement information.

**8.** A communication method, wherein the method comprises:
separately receiving, by a first access point, AP, an uplink signal from an associated station, STA, of the first AP, an uplink signal from an associated STA of a second AP, and a signal from the second AP at at least two beam widths, to obtain first channel measurement information.

**9.** The method according to claim 8, wherein the uplink signal comprises an acknowledgment frame.

**10.** The method according to claim 8 or 9, wherein the method further comprises:
receiving, by the first AP, second channel measurement information from the second AP, wherein the second channel measurement information comprises a channel measurement value between the second AP and the first AP and/or the associated STA of the first AP separately at the at least two beam widths.

**11.** The method according to any one of claims 8 to 10, wherein the method further comprises:

receiving, by the first AP, a coordinated transmission notification from the second AP, wherein the coordinated transmission notification carries a coordinated transmission parameter, the coordinated transmission parameter is obtained based on a first STA and a first beam width, the first STA is a STA that is selected by the second AP from the associated STAs of the second AP and that is used for coordinated transmission, and the first beam width is a first beam width that is selected by the second AP from at least two adjustable beam widths of the second AP and that is used for coordinated transmission; and
selecting, by the first AP based on the coordinated transmission parameter and channel measurement information, a second beam width used for coordinated transmission from at least two adjustable beam widths of the first AP, and selecting a second STA used for coordinated transmission from the associated STAs of the first AP, wherein the channel measurement information comprises the first channel measurement information and the second channel measurement information, and the second channel measurement information comprises the channel measurement value between the second AP and the first AP and/or the associated STA of the first AP separately at the at least two beam widths.

**12.** The method according to claim 11, wherein the coordinated transmission parameter comprises at least two of the first beam width, an identifier of the first STA, and a first interference limit, and the first interference limit indicates maximum tolerable interference to a transmission link between the second AP and the first STA at the first beam width.

**13.** The method according to claim 11 or 12, wherein interference caused by the transmission link between the second AP and the first STA at the first beam width to a transmission link between the first AP and the second STA at the second beam width is less than a second interference limit of the transmission link between the first AP and the second STA at the second beam width, and the second interference limit is obtained based on the channel measurement information.

**14.** A communication apparatus, used in a sharing AP, wherein the apparatus comprises a module configured to perform the steps in the communication method according to any one of claims 1 to 7 or the communication method according to any one of claims 8 to 13.

**15.** A computer-readable storage medium, comprising instructions, wherein when the computer-readable storage medium is run on a computer, the computer is enabled to perform the communication method according to any one of claims 1 to 7 or the communication method according to any one of claims 8 to 13.

FIG. 1

FIG. 2

FIG. 3

FIG. 4a

FIG. 4b

First beam width

Omnidirectional

AP 1        C-RS-A        TF        BA

STA 1-1    UL

STA 1-2    UL        UL

Omnidirectional

Second beam width

AP 2        TF        BA

STA 2-1    UL

STA 2-2    UL        UL

Preparation phase    Announcement phase    Data transmission phase

TXOP

FIG. 5

EP 4 312 384 A2

FIG. 6

FIG. 7

EP 4 312 384 A2

Sharing AP

Shared AP

S801: Select a first beam width used to schedule a sharing STA during coordinated transmission, where the first beam width is one of at least two adjustable beam widths of the sharing AP

S802: Coordinated transmission notification, where the coordinated transmission notification includes a coordinated transmission parameter

S803: Select, based on the coordinated transmission parameter, a shared STA and a second beam width that are used for coordinated transmission, where the second beam width is one of adjustable beam widths of the shared AP

FIG. 8

AP 1

AP 2

STA 1

STA x

FIG. 9a

FIG. 9b

FIG. 9c

Communication apparatus 1000

Processing module 1001

Transceiver module 1002

FIG. 10

Communication apparatus 1100

Communication interface 1101

Processor 1102

FIG. 11